# EUROPEAN PATENT APPLICATION

(11) **EP 2 497 611 A2**
(43) Date of publication of application: **12.09.2012**
(21) Application number: 11188796.4
(22) Date of filing: 11.11.2011
(51) Int. Cl.: B25J 9/16

(54) **Image processing apparatus and image processing system, and conveyor apparatus therefor**

(30) Priority: 09.03.2011 JP 2011051431
(71) Applicant: Omron Corporation, Kyoto-shi, Kyoto 600-8530 (JP)
(72) Inventor: Ikeda, Yasuyuki, Kyoto Kyoto 600-8530 (JP); Nakashita, Naoya, Kyoto Kyoto 600-8530 (JP)
(74) Representative: Horn Kleimann Waitzhofer

(57) **Abstract**

The present invention provides an image processing apparatus and an image processing system with which processing such as conveyor tracking can be easily implemented even in a production line in which a general-purpose robot is disposed, and a guidance apparatus therefor. The image processing apparatus includes: a management means for managing position information of a workpiece on the conveying apparatus; an obtaining means for performing measurement processing on an image obtained by image capturing with an image capturing unit and thereby obtaining position information of a region corresponding to a pre-registered workpiece in the image; an update means for updating the position information of the workpiece managed by the management means to values corresponding to a timing when the image capturing unit performed image capturing; an identifying means for identifying a workpiece newly conveyed into the image capturing range of the image capturing unit by comparing the position information that has been updated by the update means and the position information of the workpiece obtained by the measurement processing; and a transmitting means for transmitting position information of the workpiece identified by the identifying means to the control apparatus.

## Description

### TECHNICAL FIELD

The present invention relates to an image processing apparatus and an image processing system that are directed to conveyor tracking or the like, and a guidance apparatus therefor.

### RELATED ART

In the field of factory automation (FA), for the purpose of laborsaving, many techniques are used for controlling various types of processes by using image processing. An example application of such image processing technology is a process in which a workpiece conveyed by a conveying apparatus such as a belt conveyor is traced (tracked) and grasped by using a moving machine (hereinafter referred to as an "industrial robot" or simply as a "robot"). Such a process is referred to as conveyor tracking, for example.

With conveyor tracking technology, workpieces on the conveying apparatus are captured by an image capturing apparatus and the image obtained by capturing is subjected to measurement processing, such as pattern matching or binarization processing, performed by the image processing apparatus so as to identify the position (coordinates) of each workpiece. Then, the robot traces and grasps each workpiece based on the identified position (coordinates) of the workpiece.

For example, Patent Document 1 (Japanese Published Patent Application No. 2002-113679) discloses a tracking method in which a plurality of workpieces conveyed by a conveyor are captured and handling of the workpieces is controlled based on the position coordinates of each workpiece recognized as a result of the image capturing. More specifically, the tracking method disclosed in Patent Document 1 uses a configuration in which images are captured continuously such that an image capturing region captured by an image capturing means and an image capturing region captured immediately thereafter overlap in the traveling direction by a certain length that includes the entirety of a workpiece, and the position coordinates only of workpieces whose entirety is included in the image capturing region are recognized.

However, depending on the relationship between the workpiece size and the size of the image capturing region, a situation may occur in which the same workpiece is captured in two image capturing regions that are captured in an overlapping manner. In this case, the same workpiece is recognized twice. Accordingly, each time the position coordinates of a workpiece are ascertained, it is necessary to check whether or not the workpiece is the same as the previously detected workpiece. Hereinafter, such a check function will be referred to as a "duplication removal function" or "duplication removal".

Patent Document 2 (Japanese Published Patent Application No. 2002-283257) discloses a technique for preventing duplicate recognition of the same workpiece as described above. Specifically, Patent Document 2 discloses a method of managing the position of a moving object with which double registration of the moving object can be prevented without complicating the apparatus, and a robot control apparatus that applies the method. More specifically, the robot control apparatus is provided with a queue for managing position data. The position data is registered in the queue and sequentially updated based on the amount of operation of the conveyor. For registration of the position data, position data to be registered is compared with the position data that has already been registered in the queue, and if the position data of the same workpiece has already been registered in the queue, the position data to be registered will not be registered.

### RELATED ART DOCUMENTS

### PATENT DOCUMENTS

[Patent Document 1] Japanese Published Patent Application No. 2002-113679
[Patent Document 2] Japanese Published Patent Application No. 2002-283257

### SUMMARY OF THE INVENTION

### PROBLEMS TO BE SOLVED BY THE INVENTION

According to the configuration disclosed in Patent Document 2, a logic dedicated to implementation of the duplication removal function is required to be incorporated in the robot control apparatus. However, general-purpose robot control apparatuses do not incorporate such a logic dedicated to implementation of the duplication removal function. Accordingly, it is necessary to customize a program for implementing the duplication removal function according to the application (the production line to which the method is applied), which causes disadvantages in terms of cost and effort.

In view of the above, the present invention has been conceived to solve the problems as described above, and it is an object of the present invention to provide an image processing apparatus and an image processing system with which processing such as conveyor tracking can be easily implemented even in a production line in which a general-purpose robot is disposed, and a guidance apparatus therefor.

### MEANS FOR SOLVING THE PROBLEMS

An aspect of the present invention provides an image processing apparatus that can be connected to an image capturing unit that is disposed so as to capture workpieces conveyed on a conveying apparatus. The image processing apparatus includes: a management means for managing position information of a workpiece on the conveying apparatus; an interface for receiving a signal indicating an amount of movement of the conveying apparatus in a conveyance path; an interface for communicating with a control apparatus for controlling a moving machine that is disposed downstream, in the conveyance path, from an image capturing range of the image capturing unit and that handles the workpiece; an obtaining means for performing measurement processing on an image obtained by image capturing with the image capturing unit and thereby obtaining position information of a region corresponding to a pre-registered workpiece in the image; an update means for updating the position information of the workpiece managed by the management means to a value corresponding to a timing when the image capturing unit performed image capturing; an identifying means for identifying a workpiece newly conveyed into the image capturing range of the image capturing unit by comparing the position information that has been updated by the update means and the position information of the workpiece obtained by the measurement processing; and a transmitting means for transmitting position information of the workpiece identified by the identifying means to the control apparatus.

Preferably, the transmitting means transmits the position information of the workpiece as a value defined in a coordinate system of the moving machine.

Preferably, the transmitting means transmits the position information of the workpiece and an amount of movement in the conveyance path that corresponds to the position information of the workpiece to the control apparatus.

Preferably, the management means manages the position information of the workpiece and the amount of movement in the conveyance path in association with each other, and the update means corrects the position information of the workpiece by using a difference between an amount of movement in the conveyance path at a timing when the image capturing unit has performed image capturing and an amount of movement in the conveyance path that corresponds to position information of each workpiece.

Preferably, the image processing apparatus further includes a guidance means for displaying a guidance screen for setting a parameter set for transformation of coordinates in the image capturing range of the image capturing unit to coordinates in a coordinate system of the moving machine.

Preferably, an image capture cycle of the image capturing unit is set such that image capturing ranges at two temporally consecutive image capture timings overlap with each other.

Preferably, if a deviation between the updated position information and the position information of the workpiece obtained by the measurement processing is smaller than a preset value, the identifying means determines that the compared position information indicates the same workpiece.

An image processing system according to another aspect of the present invention includes: an image capturing unit disposed so as to capture a workpiece conveyed on a conveying apparatus; a control apparatus for controlling a moving machine that is disposed downstream, in a conveyance path of the conveying apparatus, from an image capturing range of the image capturing unit and that handles the workpiece; and an image processing apparatus connected to the image capturing unit and the control apparatus. The image processing apparatus includes: a management means for managing position information of the workpiece on the conveying apparatus; an interface for receiving a signal indicating an amount of movement of the conveying apparatus in the conveyance path; an interface for communicating with the control apparatus; an obtaining means for performing measurement processing on an image obtained by image capturing with the image capturing unit and thereby obtaining position information of a region corresponding to a pre-registered workpiece in the image; an update means for updating the position information of the workpiece managed by the management means to a value corresponding to a timing when the image capturing unit performed image capturing; an identifying means for identifying a workpiece newly conveyed into the image capturing range of the image capturing unit by comparing the position information that has been updated by the update means and the position information of the workpiece obtained by the measurement processing; and a transmitting means for transmitting position information of the workpiece identified by the identifying means to the control apparatus.

Still another aspect of the present invention provides a guidance apparatus for an image processing apparatus that can be connected to an image capturing unit that is disposed so as to capture workpieces conveyed on a conveying apparatus. The image processing apparatus is configured to be capable of communication with a control apparatus for controlling a moving machine that is disposed downstream, in a conveyance path of the conveying apparatus, from an image capturing range of the image capturing unit and that handles the workpiece. The guidance apparatus includes: a display means; a means for displaying, on the display means, a first screen that prompts a user to dispose a sheet including a calibration pattern in a field of view of the image capturing unit; a means for displaying, on the display means, a second screen that prompts the user to dispose the sheet on an upstream side of an operating range of the moving machine and position the moving machine with respect to a specific pattern in the sheet; a means for displaying, on the display means, a third screen that prompts the user to dispose the sheet on a downstream side of the operating range of the moving machine and position the moving machine with respect to the specific pattern in the sheet; a means for receiving input of an amount of movement of the conveying apparatus on the conveyance path in association with each of the first to third screens; and a means for calculating a parameter set for transformation of coordinates in the image capturing range of the image capturing unit to coordinates in a coordinate system of the moving machine based on the input information.

### EFFECTS OF THE INVENTION

According to the present invention, it is possible to easily implement processing such as conveyor tracking even in a production line in which a general-purpose robot is disposed.

### BRIEF DESCRIPTION OF THE DRAWINGS

- Fig. 1: is a schematic diagram showing the configuration of a conveyor tracking system that uses a vision sensor according to an embodiment of the present invention.
- Fig. 2: is a diagram illustrating positioning and tracking processing performed in the conveyor tracking system that uses the vision sensor according to an embodiment of the present invention.
- Fig. 3: is a schematic diagram showing the hardware configuration of the conveyor tracking system that uses the vision sensor according to an embodiment of the present invention.
- Fig. 4: shows diagrams illustrating a duplication removal function of the conveyor tracking system according to an embodiment of the present invention.
- Fig. 5: is a sequence diagram illustrating a control operation in the tracking system according to an embodiment of the present invention.
- Fig. 6: is a diagram illustrating calibration according to an embodiment of the present invention.
- Fig. 7: is a diagram showing an example of a parameter set obtained by the calibration shown in Fig. 6.
- Fig. 8: is a diagram illustrating a procedure of calibration according to an embodiment of the present invention.
- Fig. 9: is a diagram illustrating the procedure of calibration according to an embodiment of the present invention.
- Fig. 10: is a diagram illustrating the procedure of calibration according to an embodiment of the present invention.
- Fig. 11: is a schematic diagram showing the hardware configuration of an operation display apparatus connectable to the vision sensor according to an embodiment of the present invention.
- Fig. 12: is a diagram showing an example screen for user guidance that is provided in the conveyor tracking system using the vision sensor according to an embodiment of the present invention.
- Fig. 13: is a diagram showing an example screen for user guidance that is provided in the conveyor tracking system using the vision sensor according to an embodiment of the present invention.
- Fig. 14: is a diagram showing an example screen for user guidance that is provided in the conveyor tracking system using the vision sensor according to an embodiment of the present invention.
- Fig. 15: is a diagram showing an example screen for user guidance that is provided in the conveyor tracking system using the vision sensor according to an embodiment of the present invention.
- Fig. 16: is a diagram showing an example screen for user guidance that is provided in the conveyor tracking system using the vision sensor according to an embodiment of the present invention.
- Fig. 17: is a diagram showing an example screen for user guidance that is provided in the conveyor tracking system using the vision sensor according to an embodiment of the present invention.
- Fig. 18: is a diagram showing an example screen for user guidance that is provided in the conveyor tracking system using the vision sensor according to an embodiment of the present invention.
- Fig. 19: is a schematic diagram showing a variation of the hardware configuration of the conveyor tracking system that uses the vision sensor according to an embodiment of the present invention.
- Fig. 20: shows flowcharts illustrating processing in a robot control apparatus according to an embodiment of the present invention.
- Fig. 21: is a diagram illustrating positioning and tracking processing performed in a conveyor tracking system that uses a vision sensor according to a variation of an embodiment of the present invention.
- Fig. 22: is a schematic diagram showing the hardware configuration of a conveyor tracking system that uses a vision sensor according to a variation of an embodiment of the present invention.
- Fig. 23: is a schematic diagram showing the hardware configuration of a support apparatus connectable to a vision sensor 100 according to an embodiment of the present invention.

### EMBODIMENTS OF THE INVENTION

Embodiments of the present invention will be described in detail with reference to the drawings. In the drawings, parts that are the same or correspond to each other have been given the same reference signs, and redundant descriptions thereof will not be given.

### <A. System Configuration>

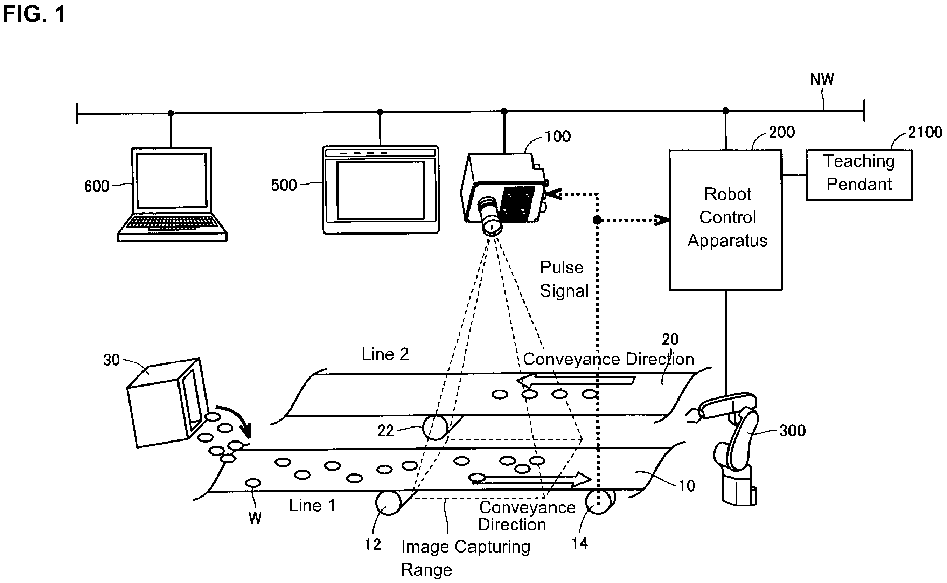

Fig. 1 is a schematic diagram showing the configuration of a conveyor tracking system that uses a vision sensor 100 according to an embodiment of the present invention. The conveyor tracking system shown in Fig. 1 includes two conveying apparatuses (conveyors) 10 and 20. The conveyors 10 and 20 are rotationally driven by driving rollers 12 and 22, respectively. Hereinafter, the conveyors 10 and 20 are also referred to as line 1 and line 2, respectively. In the example shown in Fig. 1, the line 1 moves toward the right side of the paper plane and the line 2 moves toward the left side of the paper plane. Workpieces W are randomly provided to the line 1 by a dispenser 30 or the like from the left side of the paper plane. The workpieces W on the line 1 move from the left side to the right side of the paper plane. The workpieces W can typically be food products such as confectionary, various types of tablets, or the like.

The vision sensor 100 according to the present embodiment is provided at a predetermined position above the line 1. As will be described later, the vision sensor 100 integrally includes an image capturing unit for capturing objects such as workpieces and an image processing unit for processing images captured by the image capturing unit. However, the image capturing unit and the image processing unit may be provided as separate units.

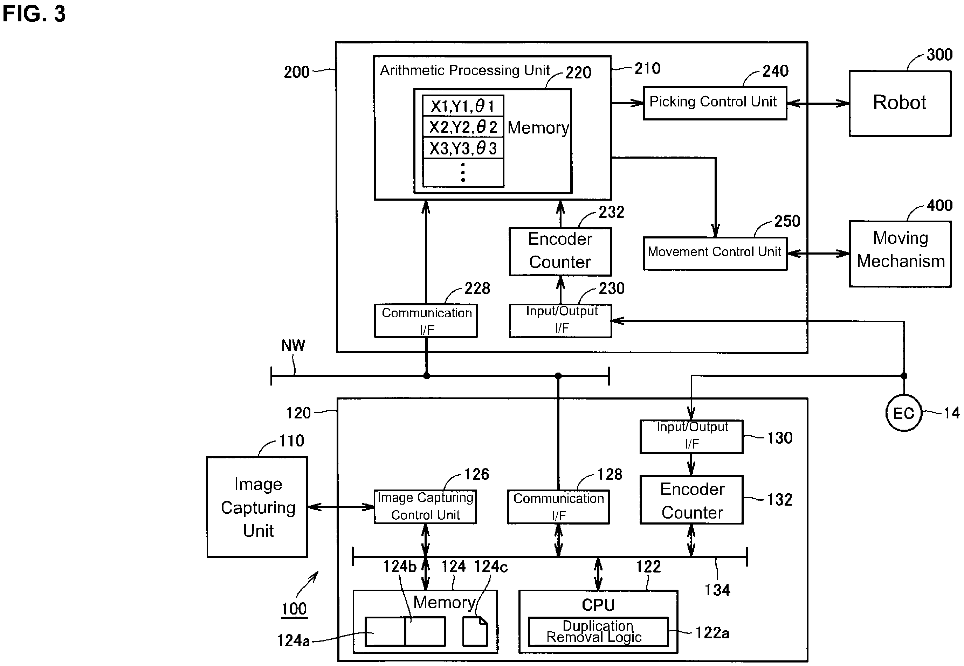

The vision sensor 100 is set such that its image capturing range covers the entire width direction of the line 1 (the direction perpendicular to the conveyance direction). The vision sensor 100 can sequentially capture workpieces W that are randomly delivered on the line 1 by performing image capturing in a predetermined cycle. The vision sensor 100 performs measurement processing, such as pattern matching, on the sequentially captured images so as to perform positioning and tracking processing of each workpiece. The image capturing unit (image capturing unit 110 shown in Fig. 3) of the vision sensor 100 is disposed such that it can capture workpieces W conveyed on the conveyor 10 serving as a conveying apparatus. The image capturing unit is connected to the image processing apparatus (image processing unit 120 shown in Fig. 3).

In the conveyance direction of the line 1, a robot 300 for grasping and moving a workpiece W to the line 2 is disposed on the downstream side of the vision sensor 100. The robot 300 has a hand tip for grasping a workpiece W, and grasps a workpiece on the line 1 by moving the hand tip to the target position. In other words, the robot 300 corresponds to a moving machine that handles workpieces W and that is disposed downstream from the image capturing range of the image capturing unit of the vision sensor 100 in the conveyance path of the conveyor 10 (line 1) serving as a conveying apparatus. More specifically, the robot 300 positions its hand tip to a target workpiece W, and picks up and neatly places the workpiece W on the line 2.

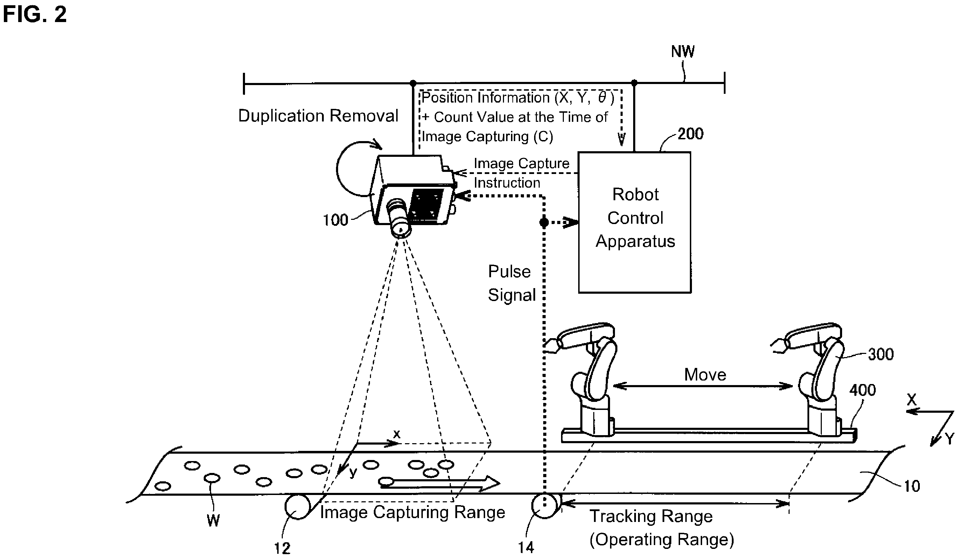

Furthermore, the robot 300 is disposed on a moving mechanism 400 (see Fig. 2) for moving the robot 300 along the line 1 so that it moves over a predetermined operating range. The operating range of the robot 300 will also be referred to as a "tracking range".

The tracking processing and positioning processing of the robot 300 are controlled using the results of detection performed by an encoder 14 provided in the line 1. The encoder 14 can typically be a rotary encoder, and generates a pulse signal by rotation. By counting the number of pulses of the generated pulse signal, the number of rotations of a roller connected to the conveyor 10 (line 1) is obtained. In other words, the pulse signal generated by the encoder 14 corresponds to a signal that indicates the amount of movement of the conveyor 10 serving as a conveying apparatus in the conveyance path, and the amount of movement of the conveyor 10 is calculated based on the pulse signal.

The robot 300 operates in accordance with instructions from a robot control apparatus 200. In other words, the robot control apparatus 200 is a control apparatus for controlling the robot 300 serving as a moving machine. The robot control apparatus 200 is connected to the vision sensor 100 via a network NW, and provides an instruction necessary for the operation of grasping each workpiece W to the robot 300 based on the position of the workpiece W detected by the vision sensor 100.

The robot control apparatus 200 is connected to a teaching pendant 2100 for performing calibration of the robot 300 or the like. The user operates the teaching pendant 2100 so as to move the robot 300 to the position required to perform calibration or the like.

An operation display apparatus 500 and a support apparatus 600 may be connected to the network NW, in addition to the vision sensor 100 and the robot control apparatus 200. The operation display apparatus 500 displays results of processing from the vision sensor 100 and the operating state of the robot 300 from the robot control apparatus 200, as well as providing various types of instructions to the vision sensor 100 and/or the robot control apparatus 200 in response to user operations.

The conveyor tracking system shown in Fig. 1 has a duplication removal function in order to avoid a situation in which a workpiece is detected in duplicate when image capturing is performed with overlapping image capturing ranges. In particular, a duplication removal logic for implementing the duplication removal function is incorporated in the vision sensor 100. The vision sensor 100 removes the duplication, and transmits the visually detected position information of the workpiece to the robot control apparatus 200. By incorporating the duplication removal logic in the vision sensor 100 as described above, even a general-purpose robot control apparatus can perform processing such as conveyor tracking with further accuracy. The duplication removal function will be described later in detail.

### <B. Positioning and Tracking Processing>

A detailed description of positioning and tracking processing performed in the conveyor system shown in Fig. 1 will be given next.

Fig. 2 is a diagram illustrating positioning and tracking processing performed in the conveyor tracking system that uses the vision sensor 100 according to an embodiment of the present invention. As shown in Fig. 2, the vision sensor 100 captures the line 1 by using the built-in image capturing unit. The image capturing operation of the vision sensor 100 starts in response to an image capture instruction from the robot control apparatus 200. The image capture instruction is conveyed via the network NW connecting the vision sensor 100 and the robot control apparatus 200. The network NW can typically be a general-purpose network such as Ethernet®.

The vision sensor 100 is configured to receive an image capture instruction from the robot control apparatus 200, and starts image capturing in response to the image capture instruction. The vision sensor 100 thereby sequentially obtains images showing the image capturing range. Then, the vision sensor 100 executes measurement processing (typically, pattern matching processing or binarization processing based on a pre-registered model image for workpiece W) on the images. Furthermore, the vision sensor 100 transmits, to the robot control apparatus 200, position information (X, Y, θ) of each workpiece W at the time of image capturing obtained by the measurement processing.

In this manner, the vision sensor 100 performs measurement processing on the images obtained by image capturing with the image capturing unit and thereby obtains position information of a region, in the image, corresponding to the pre-registered workpiece. At this time, the vision sensor 100 manages the position information of the workpiece W on the conveying apparatus (conveyor) 10. Specifically, the vision sensor 100 includes a management means for managing position information of a workpiece on the conveying apparatus (conveyor). The vision sensor 100 executes processing for removing, from the newly obtained position information of a workpiece W, those for which the position information has already been obtained (duplication removal processing), and transmits only the newly obtained position information of the workpieces W to the robot control apparatus 200.

As described above, the position information of the workpiece W transmitted from the vision sensor 100 to the robot control apparatus 200 has already been subjected to duplication removal, and therefore the robot control apparatus 200 can use the received position information to perform a grasping operation, without performing special processing.

The position information transmitted from the vision sensor 100 includes the position (X, Y) of the workpiece Won the conveyor 10 and the rotation angle (θ) of the workpiece W.

From the viewpoint of simplifying the processing of the robot control apparatus 200, values transformed to a coordinate system for controlling the robot 300 are used as the coordinates (X, Y) of the workpiece W. Specifically, the vision sensor 100 transmits the position information of the workpiece W to the robot control apparatus 200 in the form of values defined by the coordinate system of the robot 300.

For example, as shown in Fig. 2, the hand tip (picking) position of the robot 300 is defined by the X coordinate (the conveyance direction of the conveyor) and the Y coordinate (the direction that is perpendicular to the conveyance direction of the conveyor), and the position of each workpiece detected by pattern matching processing is identified using the XY coordinate system (hereinafter also referred to as the "robot coordinate system"). As described above, the position information includes coordinates of a region corresponding to the pre-registered workpiece in the image obtained by image capturing, the coordinates being expressed in a coordinate system of the robot 300 serving as a moving machine ("robot coordinate system"). Also, the vision sensor 100 and the robot control apparatus 200 have been calibrated in advance so that the position information of each workpiece W measured can be output as values in the robot coordinate system. The calibration will be described later.

The rotation angle (θ) of a workpiece W means a rotation angle with respect to the model image of workpiece W. In other words, the position information further includes the rotation angle of a region corresponding to the pre-registered workpiece in the image with respect to the orientation of the pre-registered workpiece. Depending on the shape of the workpiece W, the rotation angle of the hand tip of the robot 300 or the like is properly controlled based on the rotation angle information.

The robot control apparatus 200 counts the number of pulses included in the pulse signal from the encoder 14, and transmits an image capture instruction to the vision sensor 100 via the network NW at the timing when a number of pulses greater than or equal to a preset value is input.

The position information of each workpiece from the vision sensor 100 is transmitted to the robot control apparatus 200 via the network NW and stored in a memory provided inside the robot control apparatus 200. Also, the robot control apparatus 200 updates the coordinates (X, Y) of all workpieces W stored in the memory each time a pulse signal is received from the encoder 14. This is done so as to track workpieces W that are actually conveyed on the belt conveyor in the memory of the robot control apparatus 200. When the updated position information (coordinates) of a workpiece W falls in the tracking range of the robot 300, an instruction necessary for the grasping operation is given to the robot 300.

The pulse signal generated according to the detection result from the encoder 14 provided in the line 1 is configured to be input into the vision sensor 100 and the robot control apparatus 200. The vision sensor 100 and the robot control apparatus 200 each include an encoder counter for counting the number of pulses of the pulse signal. The pulse signal from the encoder 14 is input in parallel into the vision sensor 100 and the robot control apparatus 200, and thus when the respective encoder counters are initialized (counter reset) at the same timing, the encoder counters will indicate the same count value for the subsequently input pulse signal. That is, the count values can be synchronized.

More specifically, the amount of movement of the conveyor per pulse of the pulse signal from the encoder 14 is preset in each of the vision sensor 100 and the robot control apparatus 200. Furthermore, the same parameters (counter maximum value, counter minimum value, incremental value per pulse and so on) have been set in each of the respective encoder counters of the vision sensor 100 and the robot control apparatus 200. In other words, the same count parameters have been set in the encoder counter of the vision sensor 100 and the encoder counter of the robot control apparatus 200.

The count values of the encoder counters are initialized to 0 before the production line is operated. In other words, the encoder counter of the vision sensor 100 is reset together with the encoder counter of the robot control apparatus 200 before counting of the number of pulses of the pulse signal is started.

As described above, in the present embodiment, a means for synchronizing and maintaining the amount of movement of the conveyor 10 in the conveyance path between the vision sensor 100 and the robot control apparatus 200 is implemented.

With the configuration described above, the vision sensor 100 adds the count value obtained when image capturing is actually performed in response to an image capture instruction from the robot control apparatus 200 to the position information of each workpiece and transmits the position information to the robot control apparatus 200. In other words, the vision sensor 100 transmits the position information of a workpiece W and the amount of movement of the conveyor 10 corresponding to the position information to the robot control apparatus 200.

As described above, because the count values are synchronized and maintained between the vision sensor 100 and the robot control apparatus 200, even if there is a time lag between the timing when the robot control apparatus 200 transmits an image capture instruction and the timing when the vision sensor 100 actually performs image capturing in response to the image capture instruction, the timing when image capturing is actually performed can be identified on a common time axis, or in other words, by using the synchronized count values.

Thus, the vision sensor 100 transmits to the robot control apparatus 200 the position information of the detected workpiece W and the amount of movement of the conveyor 10 when the image used to obtain the position information was captured. The amount of movement when the image used to obtain the position information of the workpiece W is indicated by the count value of the counter.

The robot control apparatus 200 corrects, by using the count value at the time of image capturing received from the vision sensor 100, the corresponding position information and stores the corrected position information in the memory included in the robot control apparatus 200. It is thereby possible to avoid a situation in which a time lag between the output of an image capture instruction and the actual image capturing caused by a high line speed affects the positioning and tracking processing of the robot 300.

### <C. Hardware Configuration>

Fig. 3 is a schematic diagram showing the hardware configuration of the conveyor tracking system that uses the vision sensor 100 according to an embodiment of the present invention. As shown in Fig. 3, the vision sensor 100 includes an image capturing unit 110 and an image processing unit 120.

The image capturing unit 110 is an apparatus for capturing an object that is present in the image capturing range, and includes, as primary constituent elements, an optical system composed of a lens and an aperture, and a light receiving element such as a CCD (Charge Coupled Device) image sensor or CMOS (Complementary Metal Oxide Semiconductor) image sensor. The image capturing unit 110 performs image capturing in accordance with an instruction from the image processing unit 120 and outputs image data obtained by the image capturing to the image processing unit 120.

The image processing unit 120 includes a CPU (Central Processing Unit) 122, a memory 124, an image capturing control unit 126, a communication interface (I/F) 128, an input/output interface (I/F) 130 and an encoder counter 132. These components are connected so as to be capable of data communication with each other via a bus 134.

The CPU 122 is a processor that performs main arithmetic operations in the image processing unit 120. The memory 124 stores various types of programs executed by the CPU 122, image data captured by the image capturing unit 110, various types of parameters and the like. Typically, the memory 124 includes a volatile storage device such as a DRAM (Dynamic Random Access Memory) and a non-volatile storage device such as a flash memory.

In particular, in the vision sensor 100 of the present embodiment, a duplication removal logic 122a is implemented by the CPU 122 executing a program. Of course, it is also possible to implement all or part of the duplication removal logic 122a as hardware. The memory 124 includes a previous detection buffer 124a and a current detection buffer 124b that are used by the duplication removal logic 122a. The buffers 124a and 124b hold the results of measurement processing on the images obtained by two consecutive instances of image capturing. Specifically, the previous detection buffer 124a stores coordinates detected by the previous measurement processing and the corresponding count value (encoder value). The current detection buffer 124b stores coordinates detected by the current measurement processing and the corresponding count value (encoder value). By comparing the coordinates stored in the buffers 124a and 124b with each other, a situation can be avoided in which the coordinates of the same workpiece are detected twice. In the memory 124, a region for checking the duplication (not shown) is provided in the buffers 124a and 124b. In other words, the management means for managing position information of a workpiece on the conveyor 10 is implemented by the previous detection buffer 124a and the current detection buffer 124b.

Furthermore, the memory 124 holds a parameter set 124c for outputting the coordinates in a coordinate system (hereinafter also referred to as the "image coordinate system") of the image captured by the image capturing unit 110 in the form of coordinates of the robot coordinate system. The method of obtaining the parameter set 124c will be described later.

The image capturing control unit 126 controls the image capturing operation of the connected image capturing unit 110 in accordance with an internal command from the CPU 122 and the like. The image capturing control unit 126 includes an interface for transmitting various types of commands to the image capturing unit 110 and an interface for receiving image data from the image capturing unit 110.

The communication interface 128 exchanges various types of data with the robot control apparatus 200. Typically, the vision sensor 100 and the robot control apparatus 200 are connected via Ethernet®, and the communication interface 128 is hardware compliant with Ethernet®.

The input/output interface 130 outputs various types of signals from the image processing unit 120 to the outside or receives input of various types of signals from the outside. Particularly, the input/output interface 130 receives the pulse signal generated by the encoder 14, converts the received signal to a digital signal and outputs the digital signal to the encoder counter 132.

The encoder counter 132 counts the number of pulses of the pulse signal from the encoder 14. The encoder counter 132 basically operates independent of the arithmetic operation cycle of the CPU 122, and therefore does not miscount the number of pulses of the pulse signal from the encoder 14.

The robot control apparatus 200 includes an arithmetic processing unit 210, a communication interface (I/F) 228, an input/output interface (I/F) 230, an encoder counter 232, a picking control unit 240 and a movement control unit 250.

The arithmetic processing unit 210 is a processor that performs arithmetic operations for outputting commands to the robot 300 and the moving mechanism 400 based on the position information from the vision sensor 100, and includes a memory 220 for tracking each workpiece W. The memory 220 stores the position information of each workpiece W detected by measurement processing of the vision sensor 100. The arithmetic processing unit 210 sequentially updates the position information of each workpiece according to the movement of the conveyor of interest (detected based on the pulse signal from the encoder 14).

The communication interface (I/F) 228 exchanges various types of data with the image processing unit 120 of the vision sensor 100. Typically, the vision sensor 100 and the robot control apparatus 200 are connected via Ethernet®, and the communication interface 228 is hardware compliant with Ethernet®.

The input/output interface 230 outputs various types of signals from the robot control apparatus 200 to the outside, or receives input of various types of signals from the outside. Particularly, the input/output interface 230 receives the pulse signal generated by the encoder 14, converts the received signal to a digital signal and outputs the digital signal to the encoder counter 232.

The encoder counter 232 counts the number of pulses of the pulse signal from the encoder 14. The encoder counter 232 basically operates independent of the arithmetic operation cycle of the arithmetic processing unit 210, and therefore does not miscount the number of pulses of the pulse signal from the encoder 14.

The picking control unit 240 controls the grasping operation of the connected robot 300 in accordance with an internal command from the arithmetic processing unit 210 or the like. The picking control unit 240 includes an interface for transmitting a target position of the robot 300 on its movable axis and an interface for receiving the current position of the robot 300 on its movable axis.

The moving mechanism 400 controls tracking in the moving mechanism 400 that drives the connected robot 300 in accordance with an internal command from the arithmetic processing unit 210 or the like. The moving mechanism 400 includes an interface for transmitting a target position and a target speed of the moving mechanism 400 and an interface for receiving the current position of the moving mechanism 400 on the movement axis.

### <D. Duplication Removal Logic>

(d1: Overview)
The duplication removal logic of the conveyor tracking system of the present embodiment will be described next.

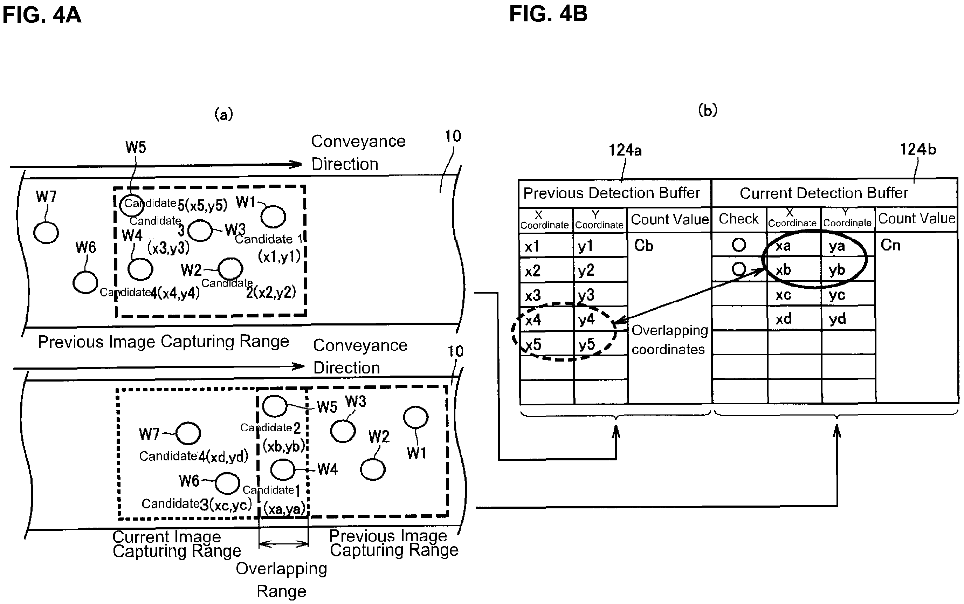

Fig. 4 shows diagrams illustrating the duplication removal function of the conveyor tracking system according to an embodiment of the present invention. As shown in Fig. 4(a), the vision sensor 100 performs image capturing each time the conveyor 10 moves by a predetermined distance. At this time, the image capturing interval is set such that the image capturing range corresponding to image capturing at a certain timing and the image capturing range corresponding to image capturing at the subsequent timing overlap with each other by a certain length. In other words, the image capture cycle of the image capturing unit 110 is set such that image capturing ranges at two temporally consecutive image capture timings overlap with each other. The overlapping range is preferably set to be larger than the size (maximum value) of the workpiece to be detected. With this configuration, a workpiece on the downstream end of the image capturing range will be wholly included within the next image capturing range, whereby it is possible to detect all workpieces by search processing such as pattern matching. The image capturing operation may be executed in response to an image capture instruction from the robot control apparatus 200 or may be executed by a trigger that instructs the image capture timing and that is generated inside the vision sensor 100.

However, when the image capturing range and the image capture timing are set in the manner described above, a situation may occur in which the same workpiece W is detected twice (in duplicate) due to two consecutive instances of image capturing and the images obtained by the two instances of image capturing. In such a case, the duplication removal function of performing processing for invalidating the second detection result is performed.

As shown in Fig. 4(a), workpieces W4 and W5 are included in both the current image capturing range and the previous image capturing range, and consequently, the coordinates of the workpieces W4 and W5 are output in the results of both previous and current instances of measurement.

Specifically, as shown in Fig. 4(b), workpieces W1 to W5 are included in the previous image capturing range, and their respective coordinates (x1,y1), (x2,y2), (x3,y3), (x4,y4) and (x5,y5) are stored in the previous detection buffer 124a in association with the count value Cb (corresponding to the amount of movement of the conveyor 10) at the image capture timing. In this state, it is assumed that image capturing is performed. In this case, workpieces W4 to W7 are included in the current image capturing range, and their respective coordinates (xa,ya), (xb,yb), (xc,yc) and (xd,yd) are stored in the current detection buffer 124b in association with the count value Cn (corresponding to the amount of movement of the conveyor 10) at the image capture timing.

In the manner described above, the previous detection buffer 124a and the current detection buffer 124b used as a management means manage the position information of workpieces and the amount of movement (count value) on the conveyor 10 in association with each other.

Furthermore the coordinates stored in the previous detection buffer 124a are updated to coordinates corresponding to the current count value, and then it is determined whether the updated coordinates match the coordinates stored in the current detection buffer 124b. In the example shown in Fig. 4, the coordinates of workpieces W4 and W5 are detected by measurement processing on the images obtained by two consecutive instances of image capturing, but with execution of duplication removal processing as described above, the second detection result will not be output.

As shown in Fig. 4, the vision sensor 100 manages the coordinates as a measurement result and the count value at the time of image capturing (the amount of movement in the conveyance path) in association with each other. Fig. 4 shows an example in which the measurement results of two most recent instances of measurement and the corresponding count value are associated and managed, but it is also possible to store measurement results of a greater number of instances of image capturing. Although not shown in Fig. 4, the rotation angle of workpieces may be managed by the buffers 124a and 124b.

(d2: Update Processing and Duplication Determining Processing on Coordinates)
The duplication removal processing described above will be described next in further detail.

First, it is assumed that the amounts of movement dX (X direction) and dY (Y direction) of the workpiece per count from the encoder 14 have been obtained in advance by calibration. Because the amounts of movement dX and dY of the workpiece per count from the encoder 14 have been obtained in advance, it is possible to determine how much difference in distance there is between the measurement results obtained by two consecutive instances of image capturing. It is also assumed that a duplication determining a distance threshold value T for determining the duplication of a workpiece is set in advance.

By using these parameters, the coordinates of the same workpiece detected in duplicate can be identified, whereby it is possible to avoid a situation in which overlapping coordinates are added to the position information to be transmitted to the robot control apparatus 200.

A specific processing procedure is as follows.
(1) In response to an image capture instruction from the robot control apparatus 200, an image obtained by capturing the image capturing range with the image capturing unit 110 is obtained.

(2) Measurement processing is executed on the obtained image.
(3) The detection result (the coordinates of the workpiece in the image coordinate system) obtained by the measurement processing is transformed to coordinates defined by the robot coordinate system.

(4) The obtained detection result (the coordinates in the robot coordinate system) and the corresponding count value are stored in the current detection buffer 124b.

(5) If the previous detection buffer 124a already contains some coordinates, the coordinates of all workpieces stored in the previous detection buffer 124a are updated to coordinates corresponding to the current image capture timing, using the difference in the count value between the previous image capture timing and the current image capture timing. Specifically, the CPU 122 (duplication removal logic 122a) updates the position information of workpieces managed by the previous detection buffer 124a as a management means to values corresponding to the timing when the image capturing unit 110 performed image capturing. More specifically, if the count value corresponding to the current image capture timing is defined as Cn and the count value corresponding to the previous image capture timing is defined as Cb, then, the coordinates (X, Y) stored in the previous detection buffer 124a are converted in accordance with the following expressions.

X ← X+dX·(Cn-Cb)
Y ← Y+dY·(Cn-Cb)
In other words, the CPU 122 (duplication removal logic 122a) corrects the position information of workpieces by using the difference between the amount of movement of the conveyor 10 at the timing when the image capturing unit 110 performed image capturing and the amount of movement of the conveyor 10 corresponding to the position information of each workpiece.

(6) The distance between each set of coordinates stored in the current detection buffer 124b and the corresponding set of coordinates transformed in (5) is calculated. If the calculated distance is smaller than the duplication determining distance threshold value T, a check mark is placed (a flag is set) in the check box of the corresponding line in the current detection buffer 124b (see Fig. 4(b)). Specifically, the CPU 122 (duplication removal logic 122a) identifies a workpiece W newly conveyed into the image capturing range of the image capturing unit 110 by comparing the updated position information and the position information of workpieces obtained by measurement processing of the current instance of image capturing. At this time, if the deviation between the updated position information and the position information of workpieces obtained by measurement processing is smaller than a preset value (duplication determining distance threshold value T), the CPU 122 (duplication removal logic 122a) determines that the compared position information indicates the same workpiece.

(7) Out of the coordinates stored in the current detection buffer 124b, only those coordinates whose check box is unchecked are sequentially output. In other words, the CPU 122 (duplication removal logic 122a) transmits the position information of workpieces that have been identified as workpieces newly conveyed into the image capturing range of the image capturing unit 110 to the robot control apparatus 200.

(8) The values of the previous detection buffer 124a are cleared, and the previous detection buffer 124a is overwritten by the values stored in the current detection buffer 124b.

### (d3: Control Operation in Tracking System)

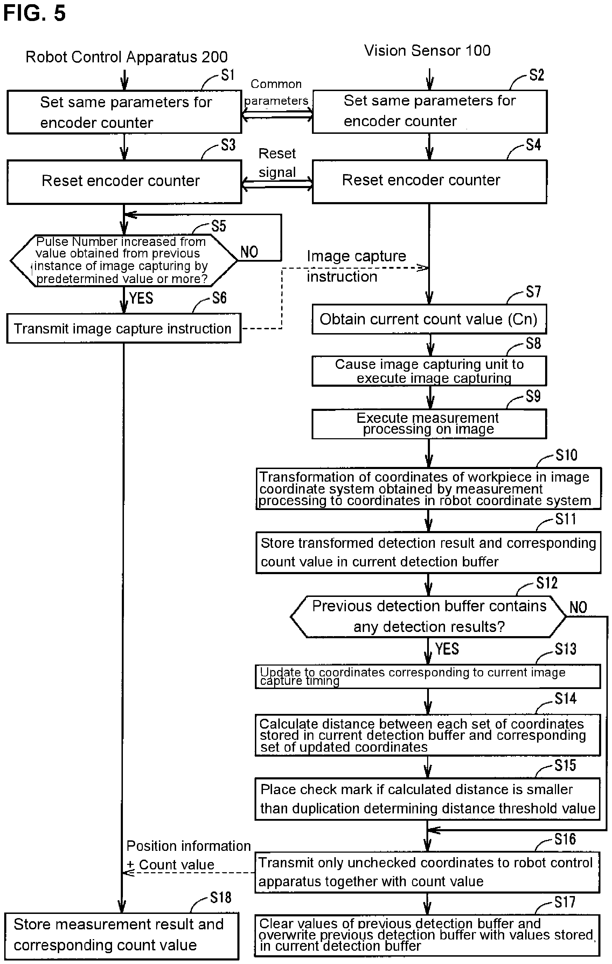

A control operation in the tracking system of the present embodiment will be described next in further detail. Fig. 5 is a sequence diagram illustrating a control operation in the tracking system according to an embodiment of the present invention.

As shown in Fig. 5, first, the same parameters (counter maximum value, counter minimum value, incremental value per pulse and so on) are set for both the vision sensor 100 and the robot control apparatus 200 (steps S1 and S2). Then, in both the vision sensor 100 and the robot control apparatus 200, their respective encoder counters are reset (counter reset) (steps S3 and S4).

The processing from step S1 to step S4 is processing for substantially synchronizing and maintaining the count values between the vision sensor 100 and the robot control apparatus 200. In other words, by common parameters being set in the encoder counters and the encoder counters being reset, the count operations of pulses included in the pulse signal from the encoder 14 are synchronized between the vision sensor 100 and the robot control apparatus 200.

Subsequently, the arithmetic processing unit 210 of the robot control apparatus 200 determines whether or not the number of pulses of the pulse signal from the encoder 14 has increased from the value obtained from the previous instance of image capturing by a predetermined value or more (step S5). In the sequence diagram shown in Fig. 5, an example of processing is shown in which the robot control apparatus 200 gives an image capture instruction to the vision sensor 100 each time the conveyor 10 moves by a predetermined distance. In the determining processing of step S5, it is determined whether or not the current count value of the encoder counter 232 has increased by a distance corresponding to the image capture timing or more.

If the number of pulses of the pulse signal from the encoder 14 reaches a predetermined value or more, the arithmetic processing unit 210 of the robot control apparatus 200 transmits an image capture instruction to the vision sensor 100 (step S6). The image capture instruction is transmitted to the vision sensor 100 via the network NW. In response to the image capture instruction from the robot control apparatus 200, the image processing unit 120 of the vision sensor 100 obtains the count value (Cn) at the time of image capturing by referencing the encoder counter 132 (step S7). Instead of steps 5 and 6, the image capture timing may be determined using the counter 132 of the vision sensor 100.

Subsequently, the image processing unit 120 of the vision sensor 100 causes the image capturing unit 110 to execute image capturing (step S8). The image obtained by image capturing with the image capturing unit 110 is transmitted to the image processing unit 120. The image processing unit 120 executes measurement processing on the image from the image capturing unit 110 (step S9). Furthermore, the image processing unit 120 transforms the measurement result (coordinates (xi, yi) of a workpiece in the image coordinate system) obtained by the measurement processing in step S9 to coordinates (X, Y) of the workpiece in the robot coordinate system (step S10). Furthermore, the image processing unit 120 stores the detection result (the coordinates in the robot coordinate system) transformed in step S10 and the corresponding count value (Cn) in the current detection buffer 124b (step S11).

Subsequently, the image processing unit 120 determines whether or not the previous detection buffer 124a contains any detection results (the coordinates in the robot coordinate system) (step S12). If it is determined that the previous detection buffer 124a contains detection results (the coordinates in the robot coordinate system) (YES in step S12), the coordinates of all workpieces stored in the previous detection buffer 124a are updated to coordinates corresponding to the current image capture timing, using the difference in the count value between the previous image capture timing and the current image capture timing (step S13).

Subsequently, the image processing unit 120 calculates the distance between each set of coordinates stored in the current detection buffer 124b and the corresponding set of coordinates updated in step S13 (step S14), and places a check mark in the corresponding line in the current detection buffer 124b if the calculated distance is smaller than the duplication determining distance threshold value T (step S15).

Subsequently, the image processing unit 120 transmits only coordinates whose line is unchecked from among the coordinates stored in the current detection buffer 124b, together with the count value C0 obtained in step S7, to the robot control apparatus 200 (step S16).

Finally, the image processing unit 120 clears the values of the previous detection buffer 124a and overwrites the previous detection buffer 124a with the current values stored in the current detection buffer 124b (step S17).

The arithmetic processing unit 210 of the robot control apparatus 200 stores the measurement results (position information and rotation angle) of workpieces W from the vision sensor 100 and the corresponding count value (step S18). Then, the procedure returns to step S5.

Because the count value indicating the image capture timing of the vision sensor 100 is added to the measurement results and transmitted, the robot control apparatus 200 can perform accurate tracking processing based on the count value corresponding to each measurement value. That is, in the conveyor tracking system of the present embodiment, the robot control apparatus 200 does not need to strictly control the image capture instruction transmitting timing (to rephrase, it is sufficient if image capture instructions are transmitted at a cycle corresponding to the conveying speed of the conveyor), and the transmission delay of measurement results from the vision sensor 100 to the robot control apparatus 200 does not constitute a problem.

### <E. Calibration>

Calibration for obtaining the parameters described above (the parameter set 124c shown in Fig. 3) will be described next.

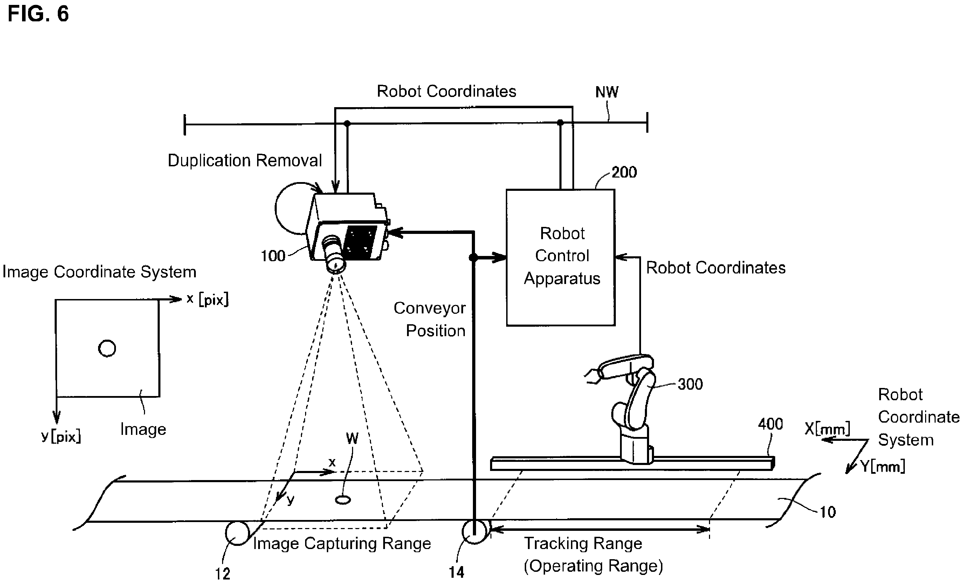

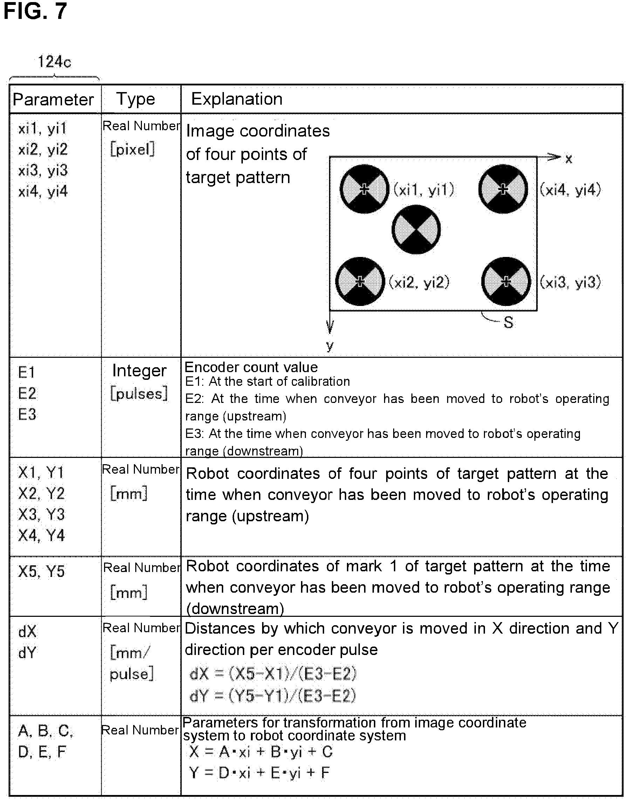

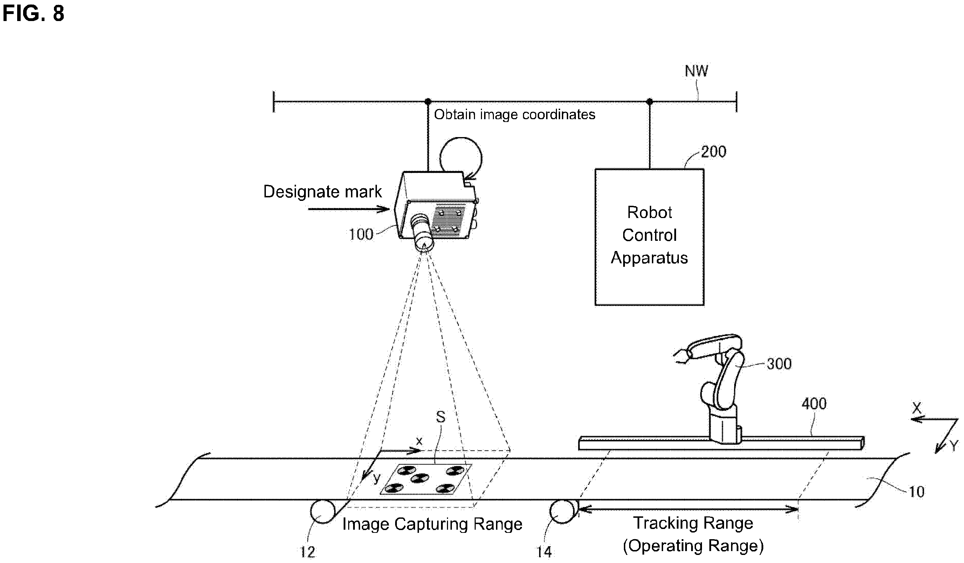

Fig. 6 is a diagram illustrating calibration according to an embodiment of the present invention. Fig. 7 is a diagram showing an example of a parameter set obtained by calibration shown in Fig. 6. Figs. 8 to 10 are diagrams illustrating a procedure of calibration according to an embodiment of the present invention.

As shown in Fig. 6, in the calibration according to the present embodiment, the following two types of calibration are mainly performed.

### (1) Calibration between robot and conveyor

In this calibration, the amount of movement of the conveyor per pulse of the pulse signal from the encoder 14 is obtained. The amount of movement of the conveyor obtained here corresponds to dX and dY shown in the second row from the bottom of Fig. 7. As shown in Fig. 7, the amount of movement of the conveyor is a vector amount, and thus values are obtained with respect to the two axes of the robot coordinate system. The amount of movement of the conveyor is a parameter necessary for the robot 300 to trace (track) the position of a workpiece on the conveyor 10 in response to a pulse signal from the encoder 14.

### (2) Calibration between vision sensor and robot

A relational equation for transforming the position information (coordinates (xi, yi) [pixel] in the image coordinate system) of a workpiece measured by the vision sensor 100 to coordinates (X, Y) [mm] in the robot coordinate system is obtained. The relational equation is defined by six parameters A to F shown in the bottom row of Fig. 7.

As shown in Fig. 6, performing calibration requires position information (robot coordinates) from the robot 300, and thus the position information is transferred from the robot control apparatus 200 to the vision sensor 100 via the network NW.

A procedure of the calibration will be described next in further detail. As will be described later, with the conveyor system of the present embodiment, the user can easily perform calibration simply by operating the system in accordance with a designated procedure without understanding the meaning of calibration described above. More specifically, the calibration of the present embodiment is implemented through a procedure involving three stages shown in Figs. 8 to 10.

In the calibration of the present embodiment, a calibration sheet S as shown in the top row of Fig. 7 is used, in which a target pattern is depicted. The target pattern shown in the calibration sheet S includes five circles (marks), each divided into colored 90-degree quadrants. As will be described later, basically, the calibration is performed using four marks, and the additionally arranged one is used to consistently set the orientation of the calibration sheet S in a predetermined direction.

### (First Stage)

In the first stage, as shown in Fig. 8, the user places a calibration sheet S in which a target pattern is depicted within the field of view of the vision sensor 100 (image capturing unit 110). The user then gives an image capture instruction to the vision sensor 100. In response thereto, the vision sensor 100 performs measurement processing on an image obtained by image capturing (the image including the target pattern as an object), and determines the coordinates of the center point of each of four marks arranged at four corners of the target pattern. Through this, the coordinates [pixel] of each of the four marks of the target pattern in the image coordinate system are obtained. Four sets of coordinates obtained here correspond to (xi1, yi1), (xi2, yi2), (xi3, yi3) and (xi4, yi4) shown in the top row of Fig. 7.

### (Second Stage)

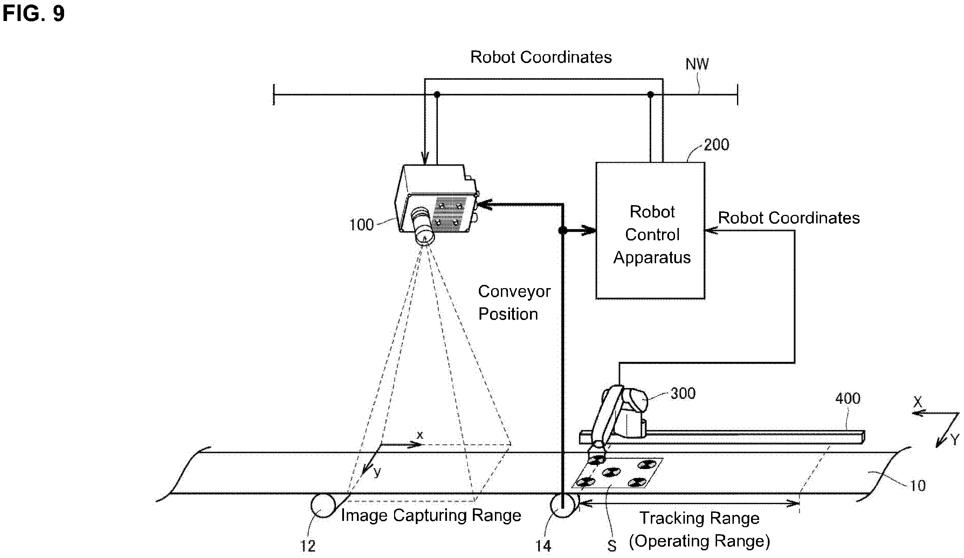

In the second stage, as shown in Fig. 9, the user moves the conveyor 10 so as to bring the calibration sheet S in which the target pattern is depicted within the tracking range (operating range) of the robot 300 and operates the robot 300 so as to associate the positions of the four marks of the target pattern with the position of the robot 300.

More specifically, first, the user moves the conveyor 10 so as to bring the calibration sheet S within the tracking range (operating range) of the robot 300. It is assumed that the count value before the conveyor 10 is moved (at the start of calibration) has been obtained in advance. This count value corresponds to an encoder count value E1 (at the start of calibration) shown in the second row from the top of Fig. 7.

Subsequently, the user operates the teaching pendant 2100 attached to the robot control apparatus 200 or the like so as to position the hand tip of the robot 300 to face one of the marks of the calibration sheet S. By the user giving an instruction in that positioned state, the position information of the robot 300 held by the robot control apparatus 200 (the coordinates in the robot coordinate system that indicate the position of the hand tip of the robot 300) is transmitted to the vision sensor 100. The processing for positioning the hand tip of the robot 300 and transmitting the position information of the robot 300 in the positioned state to the vision sensor 100 is repeatedly executed for all of the four marks of the target pattern.

Through the procedure as described above, the position information of the robot 300 corresponding to each of the four marks of the target pattern is obtained. The obtained position information of the robot 300 corresponding to the four marks correspond to (X1, Y1), (X2, Y2), (X3, Y3) and (X4, Y4) shown in the third row from the top of Fig. 7.

As shown in Fig. 9, the state in which the calibration sheet S is within the tracking range (operating range) of the robot 300 is maintained until the position information of the robot 300 corresponding to all of the four marks are transmitted to the vision sensor 100.

Also, the vision sensor 100 stores the count value obtained in the state shown in Fig. 9. This count value corresponds to an encoder count value E2 (at the time when the conveyor has been moved to the robot's operating range (upstream)) shown in the second row from the top of Fig. 7.

### (Third Stage)

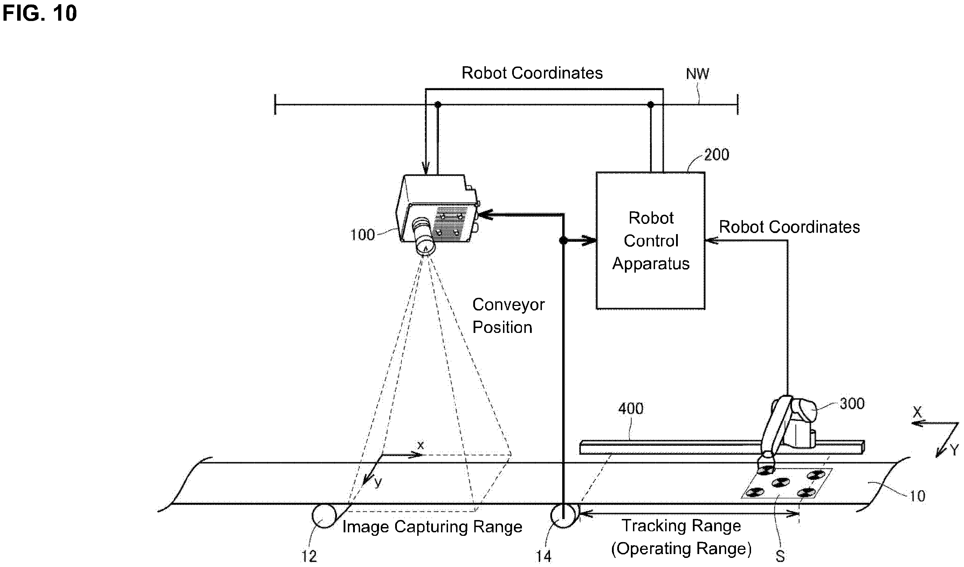

In the third stage, as shown in Fig. 10, the user further moves the conveyor 10 so as to bring the calibration sheet S to the most downstream position of the tracking range (operating range) of the robot 300, and operates the robot 300 so as to associate the position of one of the marks of the target pattern with the position of the robot 300.

More specifically, first, the user moves the conveyor 10 so as to bring the calibration sheet S to the downstream end of the tracking range (operating range) of the robot 300.

Subsequently, the user operates the teaching pendant 2100 or the like so as to position the hand tip of the robot 300 to face the first mark of the calibration sheet S (the one that obtained coordinates (X1, Y1) in the second stage). By the user giving an instruction in that positioned state, the position information of the robot 300 held by the robot control apparatus 200 (the coordinates in the robot coordinate system that indicate the position of the hand tip of the robot 300) is transmitted to the vision sensor 100.

Through the procedure as described above, the position information of the robot 300 corresponding to the first mark of the target pattern is obtained. The obtained position information of the robot 300 corresponding to the first mark corresponds to (X5, Y5) shown in the fourth row from the top of Fig. 7.

Also, the vision sensor 100 stores the count value obtained in the state shown in Fig. 10. This count value corresponds to an encoder count value E3 (at the time when the conveyor has been moved to the robot's operating range (downstream)) shown in the second row from the top of Fig. 7.

### (Parameter Calculation Processing)

Using the parameters obtained by the processing of the first to the third stages as described above, first, the amounts of movement dX and dY of the workpiece per count from the encoder 14 are calculated. More specifically, the amounts of movement are calculated by the following equations.

dX = (X5-X1)/(E3-E2)
dY = (Y5-Y1)/(E3-E2)
These equations are for finding the amount of change in the position information of the robot 300 with respect to the amount of change in the count value, which occurs between the state shown in Fig. 9 and the state shown in Fig. 10 when the hand tip of the robot 300 is positioned to the same mark in the calibration sheet S. With these arithmetic equations, the amounts of movement dX and dY of the workpiece per count are determined. In other words, calibration between robot and conveyor is implemented.

Also, six parameters A to F of a transformation equation for coordinate system transformation are determined based on correspondences between respective coordinates (xi1, yi1), (xi2, yi2), (xi3, yi3) and (xi4, yi4) in the camera coordinate system obtained in Fig. 8 and coordinates (X1, Y1), (X2, Y2), (X3, Y3) and (X4, Y4) in the robot coordinate system obtained in Fig. 9. In other words, parameters A to F that satisfy the following equations (or that yield the least error) are determined by a known technique.

X = A·xi+B·yi+C
Y = D·xi+E·yi+F
Calibration between vision sensor and robot is thereby implemented.

### <F. Guidance Function>

The conveyor tracking system using the vision sensor according to an embodiment of the present invention provides a guidance function so that the user can easily perform a calibration as described above. This guidance function may be provided by the vision sensor 100 as will be described later, or may be provided by the operation display apparatus 500 shown in Fig. 1 cooperating with the vision sensor 100. In the following description, a configuration will be illustrated in which the operation display apparatus 500 provides the guidance function. In other words, an example is shown in which the operation display apparatus 500 functions as a guidance apparatus. However, in the case where the guidance function is provided by the vision sensor 100 alone, the vision sensor 100 can be regarded as a guidance apparatus. Furthermore, the guidance function may be implemented by using a support apparatus 600 as described later. In this case, the support apparatus 600 can be regarded as a guidance apparatus.

### (f1: Hardware Configuration)

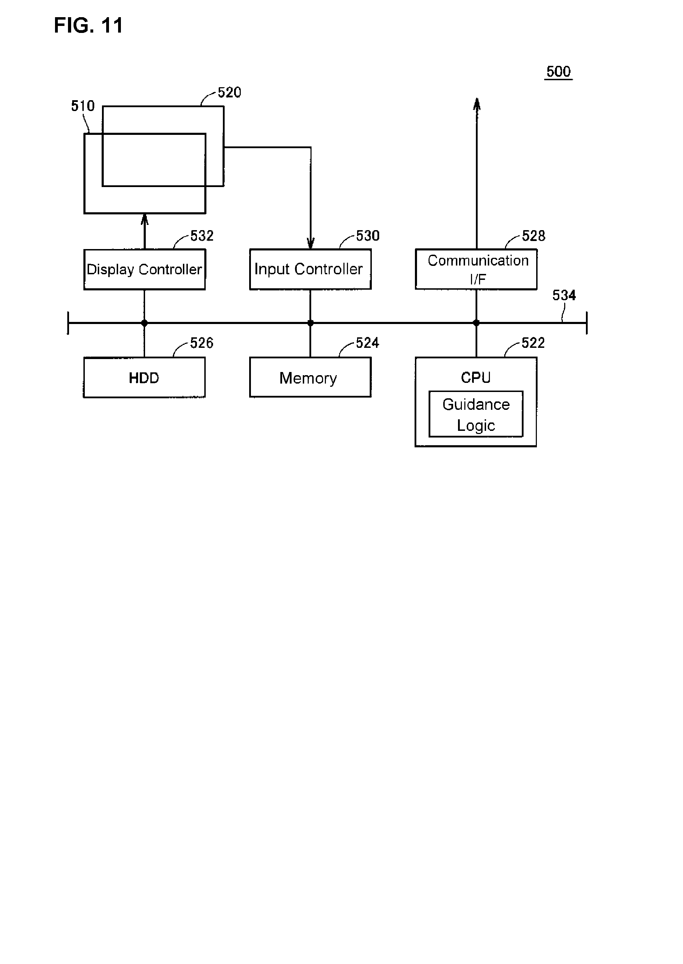

Fig. 11 is a schematic diagram showing the hardware configuration of the operation display apparatus 500 connectable to the vision sensor 100 according to an embodiment of the present invention. As shown in Fig. 11, the operation display apparatus 500 includes a display unit 510, a touch panel 520, a CPU (Central Processing Unit) 522, a memory 524, a hard disk (HDD) 526, a communication interface (I/F) 528, an input controller 530 and a display controller 532. These components are connected so as to be capable of data communication with each other via a bus 534.

The operation display apparatus 500 is a display device capable of touch operation and displays a guidance screen for the user to implement calibration processing as described above on the display. The user performs necessary operations on the guidance screen to perform calibration.

The display unit 510 typically includes a liquid crystal display. The touch panel 520 serving as an input device that receives user operations is provided on the display surface of the display unit 510.

The CPU 522 is a processor that performs main arithmetic operations in the operation display apparatus 500. The memory 524 stores various types of programs executed by the CPU 522, image data displayed on the display unit 510, various types of parameters and the like. Typically, the memory 524 includes a volatile storage device such as a DRAM and a non-volatile storage device such as a flash memory.

In particular, in the operation display apparatus 500 of the present embodiment, by the CPU 522 executing a program, a guidance logic 522a for providing a guidance function as described later is implemented. Of course, all or part of the guidance logic 522a may be mounted as hardware.

The communication interface 128 exchanges various types of data with the vision sensor 100 and the robot control apparatus 200. Typically, the communication interface 128 is hardware compliant with Ethernet®.

The input controller 530 detects a user operation on the connected touch panel 520 and outputs the detected coordinates and the like to the CPU 522.

The display controller 532 is a driver for displaying images on the connected display unit 510, and performs rendering processing on the display unit 510 in accordance with instructions from the CPU 522 and the like.

### (f2: Examples of Screen)

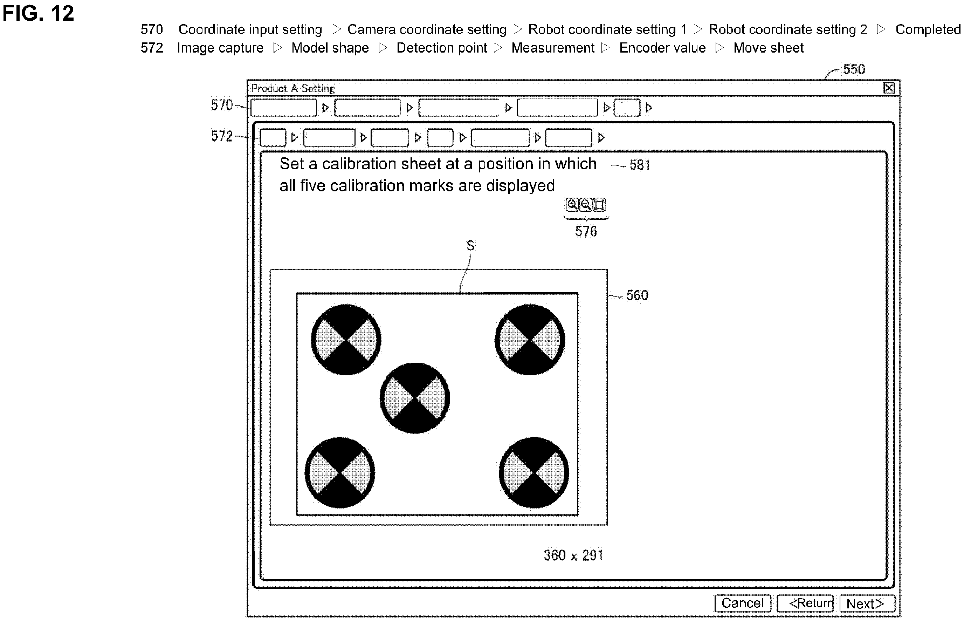

Examples of a screen for user guidance will be described next with reference to Figs. 12 to 18. Figs. 12 to 18 are diagrams showing examples of a screen for user guidance that is provided in the conveyor tracking system using the vision sensor according to an embodiment of the present invention. These diagrams sequentially transition according to the stage of the calibration described above.

When the user has set the initial settings for the coordinate system and thereafter issues an instruction to start calibration, a guidance screen 550 shown in Fig. 12 is displayed. The guidance screen 550 shown in Fig. 12 corresponds to the first stage of calibration shown in Fig. 8. Specifically, the CPU 522 (guidance logic 522a) displays, on the display unit 510, the guidance screen 550 that is a screen for prompting the user to place a sheet (calibration sheet S) including a calibration pattern (target pattern) in the field of view of the image capturing unit 110.

More specifically, the guidance screen 550 includes a whole progress indicator 570 that indicates the degree of progress of calibration and a detailed progress indicator 572 that indicates the degree of progress of a process indicated as active by the whole progress indicator 570. The guidance screen 550 also includes an input image display region 560 that displays an image obtained by image capturing with the image capturing unit 110. The image displayed in the input image display region 560 can be properly changed (scaled in size) in response to the operation of an icon included in an icon group 576. The image displayed in the input image display region 560 may be updated properly in accordance with the image capture cycle of the image capturing unit 110 or the display may be changed to show a still image at the desired timing of the user.

In the guidance screen 550 shown in Fig. 12, a message 581 indicating "Set a calibration sheet at a position in which all five calibration marks are displayed" is displayed. In accordance with the message 581, the user positions the calibration sheet S disposed on the conveyor 10 so as to be within the field of view of the image capturing unit 110.

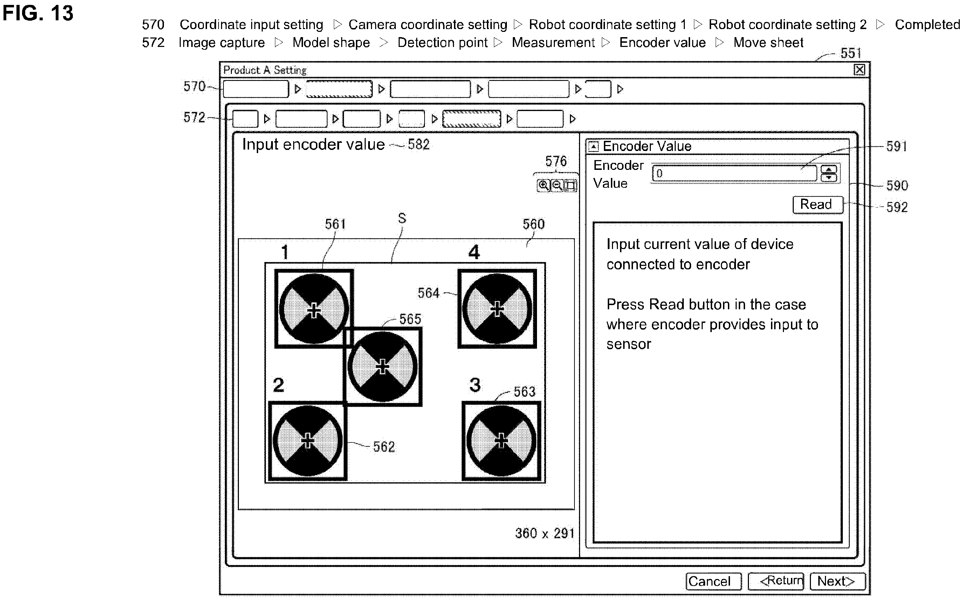

Upon completion of positioning of the calibration sheet S, the user selects a "Next" button. In response thereto, measurement processing is executed, and a guidance screen 551 shown in Fig. 13 is displayed. The measurement processing includes registration/selection processing of a model shape to be used, setting detection conditions, and the like.

In the guidance screen 551 shown in Fig. 13, the result obtained from execution of measurement processing on an image obtained by capturing the calibration sheet S in which the target pattern is depicted is displayed. Specifically, using the mark in the target pattern as a model image, regions 561 to 565 that match the model image and the center point of each region are detected. The detected center points correspond to the coordinates (xi1, yi1), (xi2, yi2), (xi3, yi3) and (xi4, yi4) described above.

The guidance screen 551 shown in Fig. 13 includes a window 590 for receiving input of an encoder value (count value). The user reads the count value and inputs the count value, or the user selects a "Read" button 592 in the case where it is possible to directly obtain information from the encoder 14 (or the encoder counter 132). In response thereto, an encoder count value E1 (at the start of calibration) is obtained.

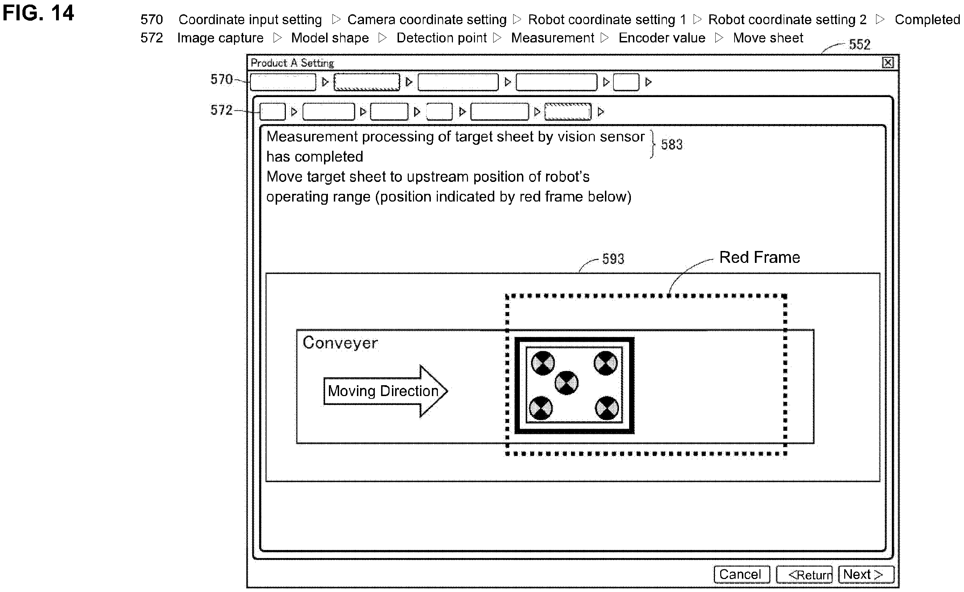

Upon completion of obtaining the coordinates of each mark in the target pattern and the corresponding encoder count value E1, the user selects the "Next" button. In response thereto, a guidance screen 552 shown in Fig. 14 is displayed.

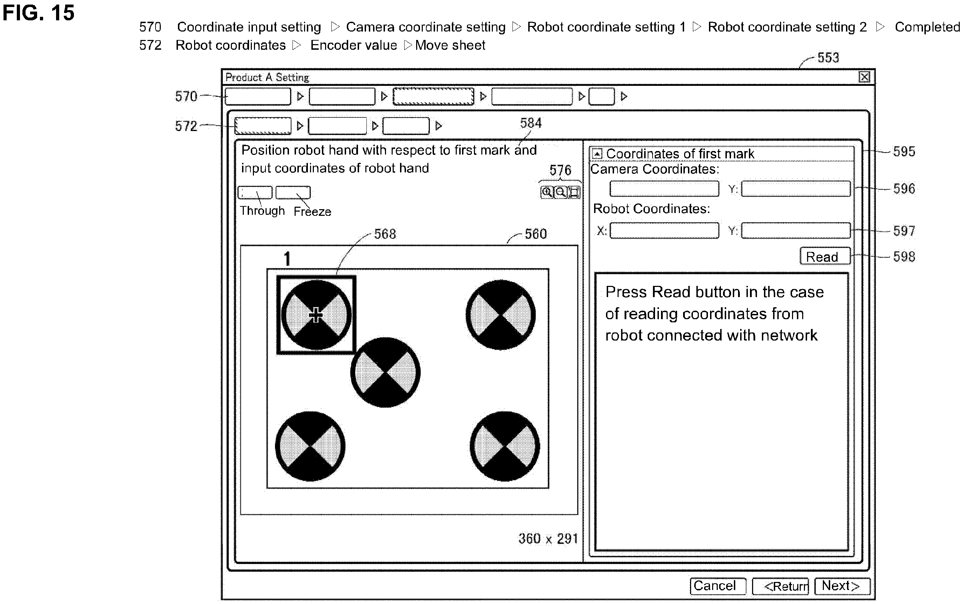

The guidance screen 552 shown in Fig. 14 includes a message 583 that instructs the user to position the calibration sheet S (target sheet) on the upstream of the operating range of the robot 300 and a guide screen 593. Upon completion of positioning the calibration sheet S on the upstream of the operating range of the robot 300, the user selects the "Next" button. In response thereto, a guidance screen 553 shown in Fig. 15 is displayed. The guidance screen 553 corresponds to the second stage of calibration shown in Fig. 9.

In other words, the CPU 522 (guidance logic 522a) displays, on the display unit 510, the guidance screen 552 that prompts the user to dispose the calibration sheet S on the upstream side of the operating range of the robot 300 and the guidance screen 553 that prompts the user to position the moving machine with respect to a specific pattern in the sheet.

The user positions the hand tip of the robot 300 with respect to a mark (a first detection region 568 in the example shown in Fig. 15) designated in the target pattern displayed in the input image display region 560 of the guidance screen 553. Furthermore, the user inputs the coordinates in the robot coordinate system in that state. Specifically, the guidance screen 553 includes a window 595 for receiving input of coordinates in the robot coordinate system, and the user reads the coordinates in the robot coordinate system displayed in the robot control apparatus 200 and inputs the coordinates. Alternatively, the user selects a "Read" button 598 in the case where it is possible to directly obtain information from the robot control apparatus 200. In response thereto, the coordinates in the robot coordinate system that indicate the position of the hand tip are obtained.

The window 595 includes an input box 596 in which the coordinates of the target mark in the image coordinate system are input and an input box 597 in which the coordinates of the robot positioned to the target mark in the robot coordinate system are input. A transformation equation (or in other words, parameters A to F) is determined from the relationship between the values set in these input boxes.

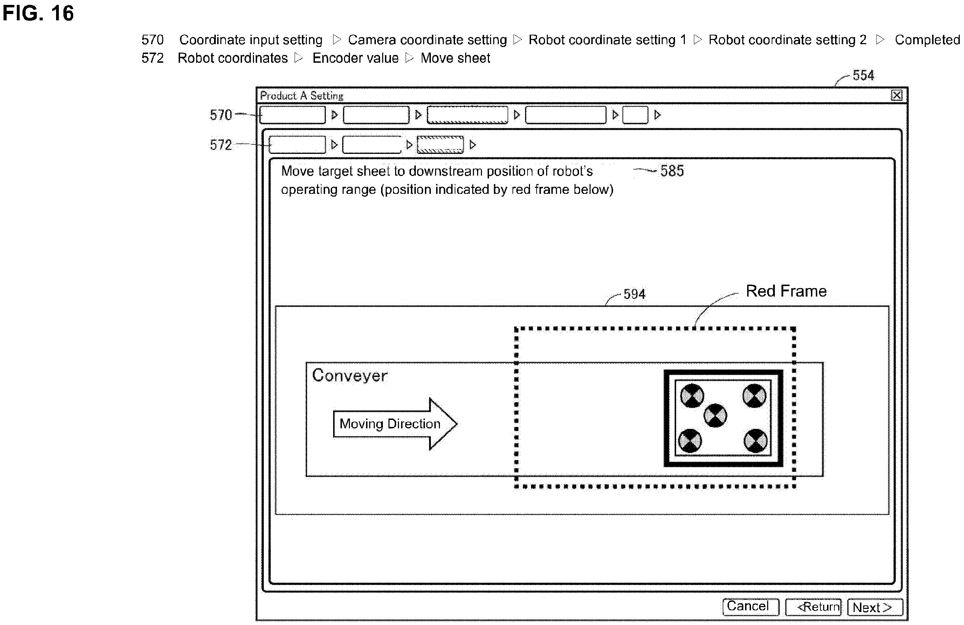

Upon completion of obtaining the coordinates of all four marks in the target pattern, the user selects the "Next" button. In response thereto, a guidance screen 554 shown in Fig. 16 is displayed.

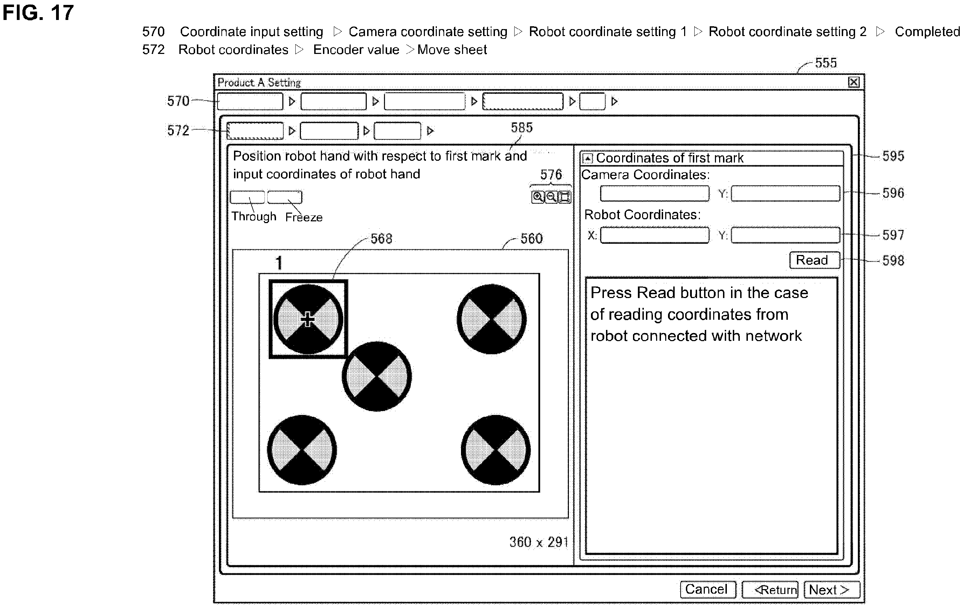

The guidance screen 554 shown in Fig. 16 includes a message 585 that instructs the user to position the calibration sheet S on the downstream of the operating range of the robot 300 and a guide screen 594. Upon completion of positioning the calibration sheet S on the downstream of the operating range of the robot 300, the user selects the "Next" button. In response thereto, a guidance screen 555 is displayed. The guidance screen 555 shown in Fig. 17 corresponds to the third stage of calibration shown in Fig. 10.

In other words, the CPU 522 (guidance logic 522a) displays, on the display unit 510, the guidance screen 554 that prompts the user to dispose the calibration sheet S on the downstream side of the operating range of the robot 300 and the guidance screen 555 that prompts the user to position the moving machine with respect to a specific pattern in the sheet.

The guidance screen 555 shown in Fig. 17 is basically the same as the guidance screen 553 shown in Fig. 15. The user positions the hand tip of the robot 300 with respect to the designated mark. Furthermore, the user inputs the coordinates in the robot coordinate system in that state. As in Fig. 15, the guidance screen 555 shown in Fig. 17 includes the window 595 for receiving input of coordinates in the robot coordinate system, and the user reads the coordinates in the robot coordinate system displayed in the robot control apparatus 200 and inputs the coordinates. Alternatively, the user selects the "Read" button 598 in the case where it is possible to directly obtain information from the robot control apparatus 200. In response thereto, the coordinates in the robot coordinate system that indicate the position of the hand tip are obtained.

Also, the CPU 522 (guidance logic 522a) receives input of the amount of movement of the conveyor 10 in the conveyance path (count value) in association with each of the guidance screens 551, 553 and 555.

The CPU 522 (guidance logic 522a) calculates the amounts of movement dX and dY of a workpiece per count from the encoder 14 from the position information obtained when the calibration sheet S was disposed in the robot's operating range (upstream) in accordance with the guidance screen 553 shown in Fig. 15 and the position information obtained when the calibration sheet S was disposed in the robot's operating range (downstream) in accordance with the guidance screen 555 shown in Fig. 17. The CPU 522 (guidance logic 522a) also calculates, based on the input information, a parameter set for transformation of coordinates in the image capturing range of the image capturing unit 110 to coordinates in the coordinate system of the robot 300.

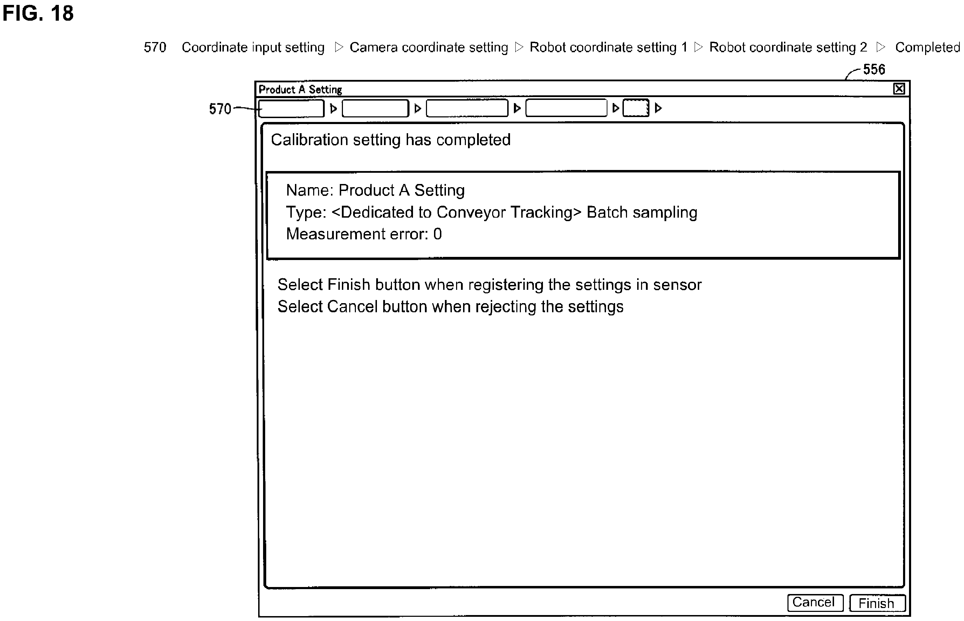

Upon completion of the series of calibration as described above, a guidance screen 556 shown in Fig. 18 is displayed. In the guidance screen 556, a notification informing that calibration has been completed, the name of the parameter set obtained by the calibration, and the like are displayed.

As described above, the present embodiment provides the function of displaying a guidance screen for setting a parameter set for transformation of coordinates in the image capturing range of the image capturing unit 110 to coordinates in the coordinate system (robot coordinate system) of the robot 300. With this configuration, even a user without knowledge of calibration can easily perform calibration.

### (f3: Variation)

In the foregoing description, the configuration in which the operation display apparatus 500 provides the guidance function was mainly illustrated. However, the guidance function may be provided by the vision sensor 100 alone. In this case, the hardware configuration is changed as follows, for example.

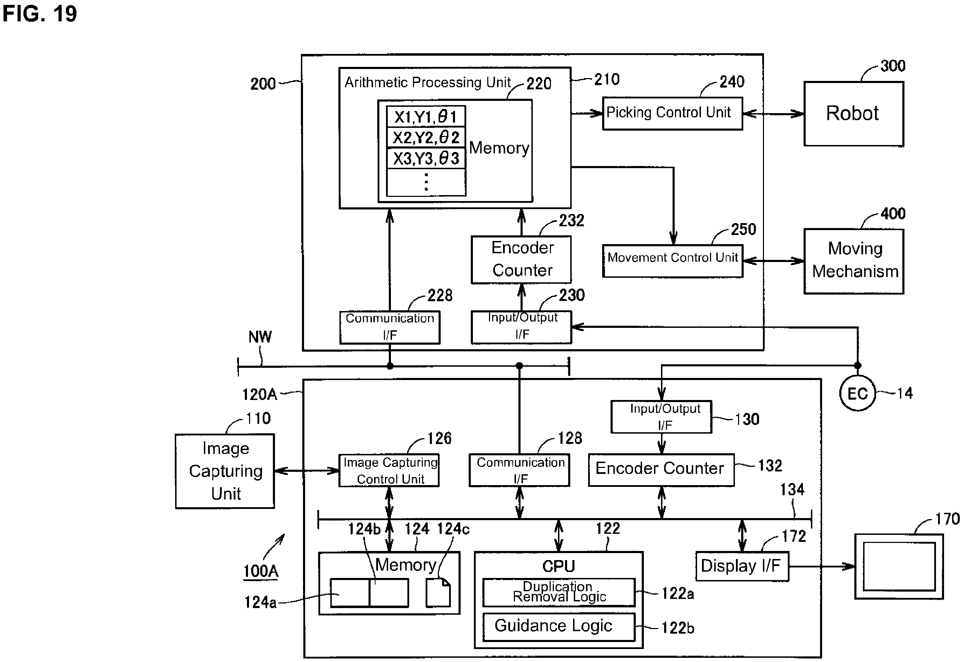

Fig. 19 is a schematic diagram showing a variation of the hardware configuration of the conveyor tracking system that uses the vision sensor according to an embodiment of the present invention. In an image processing unit 120A of a vision sensor 100A shown in Fig. 19, a guidance logic 122b has been added. The guidance screen and the like that are provided by the guidance logic 122b are displayed on a display 170 or the like connected to the vision sensor 100A via a display interface (I/F) 172.

Other constituent elements are the same as those described above, and thus a detailed description thereof is not given here.

### <G. Processing in Robot Control Apparatus>

Processing in the robot control apparatus 200 will be described next.

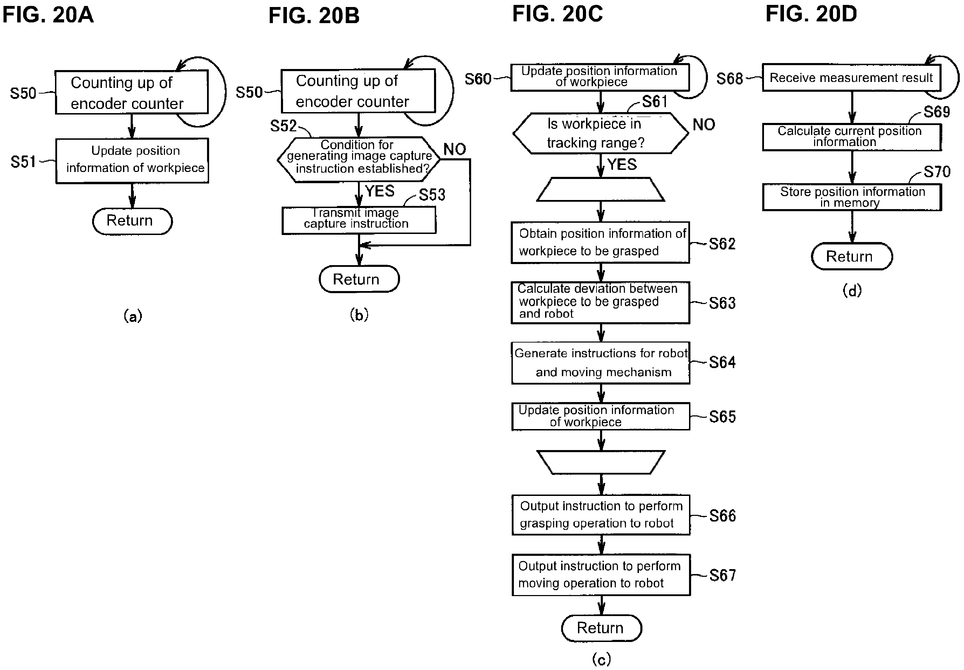

Fig. 20 shows flowcharts illustrating processing in the robot control apparatus 200 of an embodiment of the present invention. Figs. 20(a) to 20(d) show primary processing executed in the robot control apparatus 200, but the processing in the robot control apparatus 200 is not limited to that shown in Fig. 20.

Fig. 20(a) shows processing performed when the encoder 14 generates a pulse signal. More specifically, the processing of Fig. 20(a) is started by an event in which the encoder 14 generates a pulse signal and the encoder counter 232 counts up (step S50). When the encoder counter 232 has counted up, the position information of each workpiece stored in the memory of the robot control apparatus 200 is updated (step S51). The method of updating the position information is as follows.

As shown in Fig. 2, workpieces are conveyed in the X direction and the right end of the tracking range of the robot 300 is set as the origin of the X direction. Here, it is assumed that the amount of movement of the conveyor (movement vector) per pulse of the encoder 14 is (dX, dY). If n pulses are input, the position information of a workpiece W whose position information is (X0, Y0, θ0) before update will be (X0-dX×n, Y0-dY×n, θ0) after update. In other words, the value obtained by multiplying a unit amount of movement on the conveyor per pulse by the number of pulses is used as the amount of movement of the workpiece W (dX×n, dY×n). And, if it is assumed that the workpiece W is moving in the direction toward the origin, then, the position information of the workpiece is updated by an amount corresponding to the amount of movement (movement vector).

Then, the robot control apparatus 200 waits for the encoder counter 232 to start counting up. Fig. 20(b) shows another processing performed when the encoder 14 generates a pulse signal. More specifically, the processing of Fig. 20(b) is started by an event in which the encoder 14 generates a pulse signal and the encoder counter 232 counts up (step S50). When the encoder counter 232 has counted up, it is determined whether or not a condition for generating an image capture instruction has been established (step S52). In the above example, it is determined whether or not the number of pulses of the pulse signal from the encoder 14 has increased from the value obtained from the previous instance of image capturing by a predetermined value or more. If it is determined that a condition for generating an image capture instruction has been established (YES in step S52), an image capture instruction is transmitted from the robot control apparatus 200 to the vision sensor 100.

Fig. 20(c) illustrates a grasping operation performed by the robot 300. The flowchart of Fig. 20(c) is started by an event in which the position information of workpieces is updated (step S60). More specifically, when the position information of workpieces has been updated, it is determined whether or not there is a workpiece W in the tracking range of the robot 300 (step S61). If it is determined that there is a workpiece W in the tracking range of the robot 300 (YES in step S61), control of a grasping operation of the workpiece W by the robot 300 starts. Specifically, the position information of the workpiece to be grasped that is present in the tracking range is obtained (step S62), a deviation between the workpiece to be grasped and the robot 300 is calculated (step S63), instructions for the robot 300 and the moving mechanism 400 are generated based on the deviation calculated in step S63 (step S64), and the position information of the workpiece W is updated (step S65). This sequential processing is repeated. Then, when the robot 300 has moved to the position at which it can grasp the workpiece W, the robot control apparatus 200 outputs a grasping operation instruction to the robot 300 (step S66). Subsequently, a movement operation instruction for causing the robot 300 grasping the workpiece W to move the workpiece W to the target position is output to the robot 300 (step S67). The procedure then returns.

Fig. 20(d) shows position information registration processing. The flowchart shown in Fig. 20(d) is started by an event in which a measurement result is received. More specifically, the current position information is calculated (step S69), and the calculated position information is stored in the memory (step S70).

For calculation of the current position information of the workpiece W shown in step S69, a difference between the count value at the time of image capturing and the count value at each time point is calculated, and the calculated difference is multiplied by a unit amount of movement of the workpiece W on the conveyor per pulse. The obtained value is used as the amount of correction. The obtained amount of correction is applied to the measurement result (the position information of the workpiece received from the vision sensor 100), and thereby the current position information is calculated.

The conveyor tracking of the present embodiment is implemented by the processing procedure described above.

### <H. Variation of System Configuration>

In the embodiment described above, a configuration was described in which the pulse signal from the encoder 14 is input into both the vision sensor 100 and the robot control apparatus 200, and the number of pulses of the pulse signal is counted by the encoder counters 132 and 232 in which the same parameters have been set, whereby the amounts of movement of the conveyor (count values) are synchronized and maintained. Here, a configuration will be described in which the amount of movement of the conveyor (count value) is synchronized and maintained via a network.

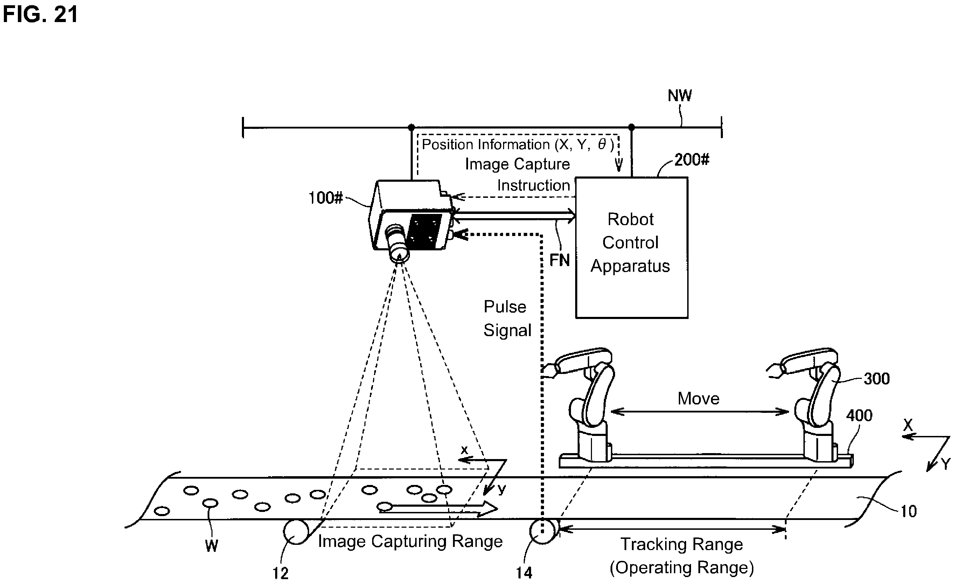

Fig. 21 is a diagram illustrating positioning and tracking processing performed in a conveyor tracking system that uses a vision sensor according to a variation of an embodiment of the present invention. As shown in Fig. 21, a conveyor tracking system using a vision sensor according to the present variation is different from the conveyor tracking system using the vision sensor of the embodiment shown in Fig. 2 in that the pulse signal from the encoder 14 is input only to a vision sensor 100#, and that a field network FN is provided between the vision sensor 100# and a robot control apparatus 200#. Other constituent elements are the same as those of the embodiment, and thus only the differences will be mainly described below.

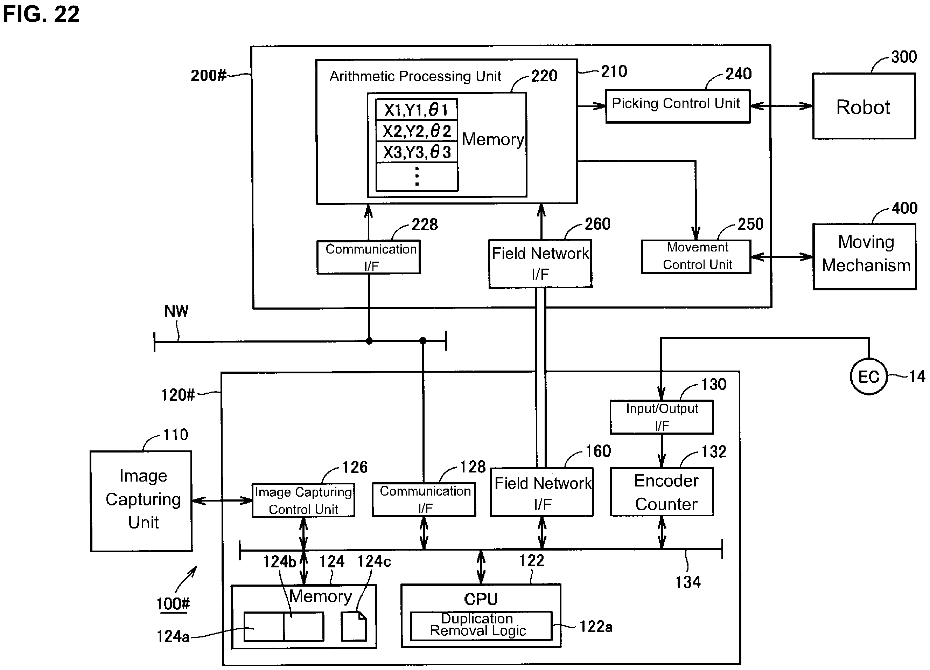

Fig. 22 is a schematic diagram showing the hardware configuration of the conveyor tracking system that uses the vision sensor according to a variation of an embodiment of the present invention. As shown in Fig. 22, the image processing unit 120# constituting the vision sensor 100# of the present variation is different from the image processing unit 120 shown in Fig. 3 in that it further includes a field network interface (I/F) 160. Also, the robot control apparatus 200# of the present variation is different from the robot control apparatus 200 shown in Fig. 3 in that a field network interface (I/F) 260 is provided in place of the encoder counter 232 and the input/output interface (I/F) 230. Other constituent elements are the same as those of the embodiment shown in Fig. 2.

The count value counted by the encoder counter 132 in the image processing unit 120# is shared between the image processing unit 120# constituting the vision sensor 100# and the robot control apparatus 200# via the field network FN.

The field network FN can typically be any type of industrial Ethernet®. Known examples of industrial Ethernet® include EtherCAT®, Profinet IRT, MECHATROLINK®-III, Powerlink, SERCOS®-III and CIP Motion, and any of these can be used. Furthermore, it is also possible to use field networks other than industrial Ethernet®. For example, in the case where motion control is not performed, DeviceNet, CompoNet/IP® or the like can be used. In the present embodiment, typically, EtherCAT® which is an industrial Ethernet® is used as the field network FN.

General field networks are configured such that the delay time between transmission and receipt becomes constant, and the delay time can be suppressed to approximately several nanoseconds, which is sufficiently smaller than the above-described delay (time lag) between transmission of an image capture instruction from the robot control apparatus 200# and the actual image capturing. Thus, the count value can be regarded as being substantially synchronized and maintained between the vision sensor 100# and the robot control apparatus 200#.

For this reason, it is unnecessary to provide encoder counters in which common parameters are set as described in the embodiment, and the count value can be synchronized between two apparatuses by using a simpler configuration. Specifically, the means for synchronizing and maintaining the amount of movement of the conveyor 10 in the conveyance path between the vision sensor 100# and the robot control apparatus 200# is implemented by the counter 132 that is provided in the vision sensor 100# (or the robot control apparatus 200#) and that is for counting the number of pulses of the pulse signal and the field network FN that shares the count value of the counter 132 substantially synchronously between the vision sensor 100# and the robot control apparatus 200#.

Even when the size of the delay time in the field network FN is not negligible, the delay time in the field network FN is controlled to a constant value, and thus the count value can be synchronized and maintained by a method as described below. Specifically, it is assumed that the count value updated in the vision sensor 100# is conveyed to the robot control apparatus 200# with a delay time ΔD. The delay time ΔD is basically constant (predictable), and thus a solution can be conceived in which the control timing or the like is shifted in consideration of the delay time ΔD.

For example, if the start timing when the vision sensor 100# starts a control operation based on the count value is delayed by the delay time ΔD, the delay time ΔD between the vision sensor 100# and the robot control apparatus 200# can be substantially cancelled out.

Alternatively, in the case where the delay time ΔD is longer than the update cycle of the count value, a correction amount (counter correction value) obtained by multiplying the pulse cycle of the pulse signal from the encoder 14 by the delay time ΔD may be added to the count value and used to perform control.

In the variation described above, an example was shown in which the vision sensor 100# serves as a host for the field network FN and the robot control apparatus 200# serves as a slave for the field network FN, but this host/slave relationship may be reversed. In this case, the pulse signal from the encoder 14 is input only into the robot control apparatus 200#, and an encoder counter is provided within the robot control apparatus 200#.

### <I. Support Apparatus>

The support apparatus 600 connected to the vision sensor 100 and the robot control apparatus 200 via the network NW will be described next.

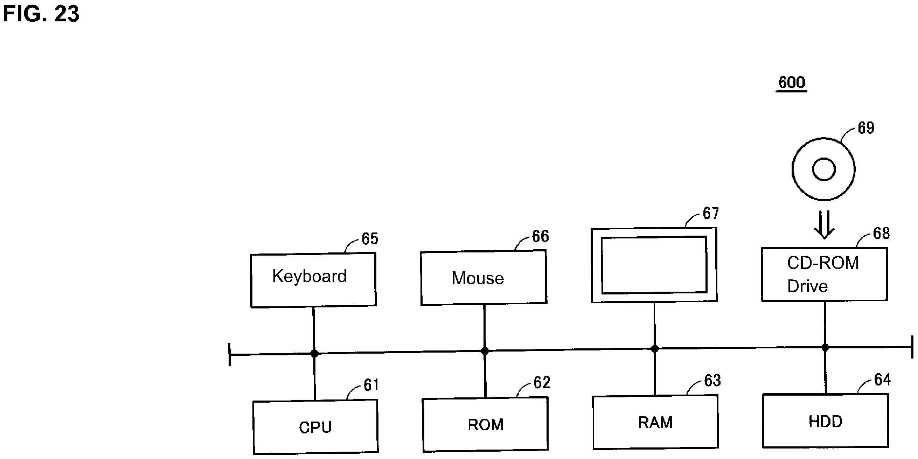

Fig. 23 is a schematic diagram showing the hardware configuration of the support apparatus 600 connectable to the vision sensor 100 according to an embodiment of the present invention. The support apparatus 600 can typically be a general-purpose computer. From the viewpoint of ease of maintenance, the support apparatus 600 is preferably a notebook personal computer with good portability.

As shown in Fig. 23, the support apparatus 600 includes a CPU 61 for executing various types of programs including an OS, a ROM (Read Only Memory) 62 for storing a BIOS and various types data, a memory RAM 63 for providing a work region for storing data required to execute a program in the CPU 61 and a hard disk (HDD) 64 for storing programs and the like executed by the CPU 61 in a nonvolatile manner.

The support apparatus 600 further includes a keyboard 65 and a mouse 66 for receiving user operations and a monitor 67 for presenting information to the user.

As will be described later, various types of programs executed by the support apparatus 600 are stored in a CD-ROM 69 and distributed. The programs stored in the CD-ROM 69 are read out by a CD-ROM (Compact Disk-Read Only Memory) drive 68 and stored in a hard disk (HDD) 64 or the like. Alternatively, a configuration may be used in which the programs are downloaded into the support apparatus 600 from the upper host computer or the like via a network

As described above, the support apparatus 600 is implemented using a general-purpose computer, and therefore a further detailed description thereof will not be given here.

The support apparatus 600 described above is capable of data communication with the vision sensor 100 and the robot control apparatus 200, and thus can collect various types of data. Accordingly, the support apparatus 600 of the present embodiment may be configured to collect images subjected to the measurement processing from the vision sensor 100 when adjustment is performed.

When images subjected to the measurement processing are collected from the vision sensor 100, each image is associated with the corresponding count value and measurement values (coordinates and angles and the like) and then stored. The information is transmitted from the vision sensor 100 to the support apparatus 600 via the network NW, and stored in the hard disk 64 or the like of the support apparatus 600.

In particular, because each image and the measurement result are associated using the corresponding count value as a key and stored, a necessary image and measurement result can be easily searched for by using a count value corresponding to the desired timing.

The following function can be provided by preparing a database containing such images and measurement results. Specifically, by recording the robot operation (positioning and tracking processing) in association with count values in the robot 300, image processing corresponding to the robot operation can be associated. With this configuration, for example, in the case where the grasping operation fails, the image of the workpiece to be grasped and the measurement result can be recreated in the support apparatus 600 to find out the cause of failure. Therefore, the cause of failure can be analyzed more easily.

### <J. Advantages>

According to the present embodiment, duplication removal processing on the position information of workpieces obtained by measurement processing on images obtained by image capturing with the image capturing unit 110 is executed in the vision sensor 100 (image processing unit 120). Accordingly, the workpiece detection results output from the vision sensor 100 to the outside do not contain overlapping position information of the same workpiece. Therefore, special processing for removing overlapping position information can be omitted in the robot control apparatus 200 (and the robot 300) that receives the workpiece detection results. Consequently, even in a general-purpose robot 300 without a duplication removal function and a robot control apparatus 200 that operates the robot 300, highly accurate processing such as conveyor tracking can be easily implemented without effort and cost.

Also, according to the present embodiment, the vision sensor 100 (image processing unit 120) directly receives input of the pulse signal from the encoder 14, and therefore an image capturing operation and measurement processing performed on the image obtained by the image capturing operation are not affected by the program execution cycle of the robot control apparatus 200.

Also, according to the present embodiment, the count value at the time of image capturing of the vision sensor 100 (image capturing unit 110) can be accurately obtained regardless of the timing at which the robot control apparatus 200 issues the image capture instruction. Accordingly, even if there is a non-negligible delay time between issuance of an image capture instruction and the actual image capturing operation, accurate tracking processing and accurate control of the robot 300 are possible. Furthermore, even if the conveyor speed is changed, the count value at the time of image capturing can be accurately obtained, and therefore it is unnecessary to adjust the parameters for counter operation depending of the conveyor speed.

The embodiments disclosed in this application are to be considered in all respects as illustrative and not limiting. The scope of the invention is indicated by the appended claims rather than by the foregoing description, and all changes which come within the meaning and range of equivalency of the claims are intended to be embraced therein.

### INDEX TO THE REFERENCE NUMERALS

- 10, 20: Conveyor
- 12: Driving Roller
- 14: Encoder
- 30: Dispenser
- 61, 122, 522: CPU
- 63: RAM
- 64: Hard Disk
- 65: Keyboard
- 66: Mouse
- 67: Monitor
- 68: Drive
- 69: CD-ROM
- 100, 100A, 100#: Vision Sensor
- 110: Image Capturing Unit
- 120, 120A, 120#: Image Processing Unit
- 122a: Duplication Removal Logic
- 122b, 522a: Guidance Logic
- 124, 220, 524: Memory
- 124a: Previous Detection Buffer
- 124b: Current Detection Buffer
- 124c: Parameter Set
- 126: mage Capturing Control Unit
- 128, 228: Communication Interface
- 130, 230: Input/Output Interface
- 132, 232: Encoder Counter
- 134,534: Bus
- 170: Display
- 200: Robot Control Apparatus
- 210: Arithmetic Processing Unit
- 240: Picking Control Unit
- 250: Movement Control Unit
- 300: Robot
- 400: Moving Mechanism
- 500: Operation Display Apparatus
- 510: Display Unit
- 520: Touch Panel
- 530: Input Controller
- 532: Display Controller
- 600: Support Apparatus
- 2100: Teaching Pendant
- FN: Field Network
- NW: Network
- S: Calibration Sheet

## Claims

1. An image processing apparatus that can be connected to an image capturing unit that is disposed so as to capture workpieces conveyed on a conveying apparatus, the image processing apparatus comprising:
a management means for managing position information of a workpiece on the conveying apparatus;
an interface for receiving a signal indicating an amount of movement of the conveying apparatus in a conveyance path;
an interface for communicating with a control apparatus for controlling a moving machine that is disposed downstream, in the conveyance path, from an image capturing range of the image capturing unit and that handles the workpiece;
an obtaining means for performing measurement processing on an image obtained by image capturing with the image capturing unit and thereby obtaining position information of a region corresponding to a pre-registered workpiece in the image;
an update means for updating the position information of the workpiece managed by the management means to a value corresponding to a timing when the image capturing unit performed image capturing;
an identifying means for identifying a workpiece newly conveyed into the image capturing range of the image capturing unit by comparing the position information that has been updated by the update means and the position information of the workpiece obtained by the measurement processing; and
a transmitting means for transmitting position information of the workpiece identified by the identifying means to the control apparatus.

2. The image processing apparatus according to claim 1,
wherein the transmitting means transmits the position information of the workpiece as a value defined in a coordinate system of the moving machine.

3. The image processing apparatus according to claim 1 or 2,
wherein the transmitting means transmits the position information of the workpiece and an amount of movement in the conveyance path that corresponds to the position information of the workpiece to the control apparatus.

4. The image processing apparatus according to claim 1 or 2,
wherein the management means manages the position information of the workpiece and the amount of movement in the conveyance path in association with each other, and
the update means corrects the position information of the workpiece by using a difference between an amount of movement in the conveyance path at a timing when the image capturing unit has performed image capturing and an amount of movement in the conveyance path that corresponds to position information of each workpiece.

5. The image processing apparatus according to claim 1 or 2, further comprising a guidance means for displaying a guidance screen for setting a parameter set for transformation of coordinates in the image capturing range of the image capturing unit to coordinates in a coordinate system of the moving machine.

6. The image processing apparatus according to claim 1,
wherein an image capture cycle of the image capturing unit is set such that image capturing ranges at two temporally consecutive image capture timings overlap with each other.

7. The image processing apparatus according to claim 1,
wherein if a deviation between the updated position information and the position information of the workpiece obtained by the measurement processing is smaller than a preset value, the identifying means determines that the compared position information indicates the same workpiece.

8. An image processing system comprising:
an image capturing unit disposed so as to capture a workpiece conveyed on a conveying apparatus;
a control apparatus for controlling a moving machine that is disposed downstream, in a conveyance path of the conveying apparatus, from an image capturing range of the image capturing unit and that handles the workpiece; and
an image processing apparatus connected to the image capturing unit and the control apparatus,
the image processing apparatus comprising:
a management means for managing position information of the workpiece on the conveying apparatus;
an interface for receiving a signal indicating an amount of movement of the conveying apparatus in the conveyance path;
an interface for communicating with the control apparatus;
an obtaining means for performing measurement processing on an image obtained by image capturing with the image capturing unit and thereby obtaining position information of a region corresponding to a pre-registered workpiece in the image;
an update means for updating the position information of the workpiece managed by the management means to a value corresponding to a timing when the image capturing unit performed image capturing;
an identifying means for identifying a workpiece newly conveyed into the image capturing range of the image capturing unit by comparing the position information that has been updated by the update means and the position information of the workpiece obtained by the measurement processing; and
a transmitting means for transmitting position information of the workpiece identified by the identifying means to the control apparatus.

9. A guidance apparatus for an image processing apparatus that can be connected to an image capturing unit that is disposed so as to capture workpieces conveyed on a conveying apparatus, the image processing apparatus being configured to be capable of communication with a control apparatus for controlling a moving machine that is disposed downstream, in a conveyance path of the conveying apparatus, from an image capturing range of the image capturing unit and that handles the workpiece,
the guidance apparatus comprising:
a display means;
a means for displaying, on the display means, a first screen that prompts a user to dispose a sheet including a calibration pattern in a field of view of the image capturing unit;
a means for displaying, on the display means, a second screen that prompts the user to dispose the sheet on an upstream side of an operating range of the moving machine and position the moving machine with respect to a specific pattern in the sheet;
a means for displaying, on the display means, a third screen that prompts the user to dispose the sheet on a downstream side of the operating range of the moving machine and position the moving machine with respect to the specific pattern in the sheet;
a means for receiving input of an amount of movement of the conveying apparatus on the conveyance path in association with each of the first to third screens; and
a means for calculating a parameter set for transformation of coordinates in the image capturing range of the image capturing unit to coordinates in a coordinate system of the moving machine based on the input information.
